# EUROPÄISCHE PATENTSCHRIFT

(11) **EP 4 499 294 B1**
(45) Veröffentlichungstag und Bekanntmachung des Hinweises auf die Patenterteilung: **17.12.2025**
(21) Anmeldenummer: 23714692.3
(22) Anmeldetag: 24.03.2023
(51) Int. Cl.: B01J 19/24, B01J 19/00, C25B 1/042

(54) **APPARATUR ZUR UNTERSUCHUNG VON CHEMISCHEN PROZESSEN IN PLATTENFÖRMIGEN ZELLEN**
APPARATUS FOR INVESTIGATING CHEMICAL PROCESSES IN PLATE-SHAPED CELLS
APPAREIL D'ÉTUDE DES PROCESSUS CHIMIQUES DANS LES CELLULES EN FORME DE PLAQUE

(30) Priorität: 29.03.2022 EP 22164980
(43) Veröffentlichungstag der Anmeldung: 05.02.2025
(73) Patentinhaber: HTE GmbH The High Throughput Experimentation Company, 69123 Heidelberg (DE)
(72) Erfinder: MUELLER, Andreas, 69123 Heidelberg (DE); DEJMEK, Michael, 69123 Heidelberg (DE); PUETTMANN, Oliver, 69123 Heidelberg (DE); HUBER, Florian, 69123 Heidelberg (DE); WASSERSCHAFF, Guido, 69123 Heidelberg (DE)
(74) Vertreter: BASF IP Association
(86) Internationale Anmeldenummer: PCT/EP2023/057610
(87) Internationale Veröffentlichungsnummer: WO 2023/186723

(56) Entgegenhaltungen:
- WO-A1-2013/074551
- WO-A1-2021/048375
- WO-A2-2009/046944
- US-A- 4 756 817
- US-A1- 2019 131 634

## Beschreibung

### Gebiet der Erfindung

Die vorliegende Erfindung betrifft eine Apparatur zur Untersuchung chemischer Prozesse, eine Mehrzahl von plattenförmigen Reaktionszellen zur Untersuchung chemischer Prozesse, sowie ein Verfahren zur Untersuchung chemischer Prozesse, mit deren bzw. dessen Hilfe zeitgleich oder in einem engen zeitlichen Zusammenhang an einer großen Anzahl von funktionellen Elementen unter Variation der Prozessparameter verfahrenstechnische und materialspezifische Optimierungen vorgenommen werden können.

### Hintergrund der Erfindung

Im Bereich der Hochdurchsatzforschung besteht ein kontinuierliches Bedürfnis die durchzuführenden Tests und Prüfungen schneller und effizienter durchführen zu können. Insbesondere auf dem Gebiet der Entwicklung von Katalysatoren und der Optimierung von Prozessen ist es sehr aufwendig die zu prüfenden Komponenten in die entsprechenden Apparaturen einzubringen, um diese dann entsprechenden Prüfungen zu unterziehen. Zur Untersuchung von Katalysatoren werden Vorrichtungen und Verfahren einschließlich der erforderlichen Softwareprogramme bereitgestellt, um die Forschungsarbeiten zu verbessern und zu beschleunigen. Dadurch ist es möglich technische Prozesse mit einer hohen Genauigkeit im Labor nachzustellen. Die große Menge an Daten und die hohe Genauigkeit helfen dabei, die Anzahl an Untersuchungen zu reduzieren, die im Technikums-Maßstab durchgeführt werden. Dadurch lassen sich bei der Entwicklung von Produkten Zeit und Energie sparen.

Im Stand der Technik sind Vorrichtungen und Verfahren zur Untersuchung von chemischen Prozessen auf dem Gebiet der Hochdurchsatzforschung bereits seit mehreren Jahrzehnten bekannt.

In der WO-A 2009/046944 wird offenbart, dass Rohrreaktoren mit einem gemeinsamen Verschlusssystem verschlossen und abgedichtet werden können.

EP-A 1 256 377 offenbart einen Array mit einer Vielzahl von Gefäßen, die in der Außenzone ein Verschlusselement aufweisen. Das Verschlusselement wird gegen den äußeren Gefäßrand gedrückt. Es werden eine Vielzahl von Gefäßen gleichzeitig unter Druck gesetzt, um eine fluiddichte Verbindung zu ermöglichen.

In der CN 11318926 wird ein Verfahren zum Hochdurchsatzscreening von Katalysatoren für die Wasserelektrolyse offenbart.

In der WO-A 2021/048375 wird ein Stapelplattenreaktor offenbart, der zur Untersuchung von chemischen Prozessen verwendet wird, wobei der Stapelplattenreaktor eine Mehrzahl von nebeneinanderliegenden plattenförmigen Formkörperbausteinen aufweist.

In der WO 2013/074551 werden ein Kapillarflussreaktoren offenbart, die auch als poröse Flussreaktoren bezeichnet werden. Die Kapillarflussreaktoren, die zur Durchführung von chemischen und biologischen Multiphasenumwandlungen eingesetzt werden, weisen eine plattenförmige Struktur auf. Die Reaktoren können eine oder mehrere Kammern aufweisen und in den Kammern unterschiedliche Kontaktierungsregionen, und zwar für Flüssigkeiten oder für Gase.

In der WO 2019/0131634 A1 werden Elektrolysezellen zur Elektrolyse oder Ko-elektrolyse von Wasser oder von Brennstoffzellen (SOFC) beschrieben. Einige Elemente der Elektrolysezelle werden mit Schraubverbindungen geschlossen. Darüber hinaus weist die Elektrolysezelle zusätzlich zu den Schraubverbindungen noch einen Stempel und eine Feder beziehungsweise einen Federbalg auf. Der Stempel führt im Innenraum eine Leitung, die in den Reaktionsraum der Zelle führt. Der Stempel ist beweglich und ermöglicht es, dass im Innenraum ein Druckausgleich erfolgen kann, sofern dies aufgrund der Reaktionsprozesse gewünscht ist.

In der US 4 756 817 wird eine Apparatur zum Andrücken und Verschieben von flachen, plattenförmigen Strukturelementen beschrieben, die erste und zweite Trägerelemente einschließen. An den Trägerelementen sind Seitenschienen angebracht. In der Apparatur können die plattenförmigen Strukturelemente beweglich angeordnet und gegeneinander verpresst werden.

Die der Erfindung zugrunde liegende Aufgabe besteht darin, eine Apparatur und ein Verfahren bereitzustellen, um elektrochemische Prozesse zu verbessern.

### Zusammenfassung der Erfindung

Die vorliegende Erfindung stellt eine Apparatur zur Untersuchung von chemischen Prozessen gemäß der unabhängigen Ansprüche bereit, wobei weitere Ausführungsformen der Erfindung in den abhängigen Ansprüchen verkörpert werden.

Die hier genannten und weitere Aufgaben, die nicht genannt sind, werden durch die nachfolgend beschriebene Apparatur gelöst: und zwar eine Apparatur zur Untersuchung von chemischen Prozessen in plattenförmigen Reaktionszellen, aufweisend:
eine Gruppe von plattenförmigen Reaktionszellen oder eine Gruppe von Stapeln mit plattenförmigen Reaktionszellen beziehungsweise, die auch einzelne plattenförmige Reaktionszellen umfassen, sowie eine Anpressvorrichtung, die eine unabhängige Fixierung der einzelnen plattenförmigen Reaktionszellen und gestapelten plattenförmigen Reaktionszellen ermöglicht,
wobei das Verschlusssystem Aufnahmeeinheiten und eine Vielzahl von Kolbenspanneinheiten umfasst, wobei die Kolbenspanneinheiten ein gemeinsames Antriebssystem aufweisen,
jeder plattenförmige Reaktionszelle oder jeder Stapel mit plattenförmigen Reaktionszelle weist zwei äußere Plattenflächen auf, wobei jeweils die eine äußere Plattenfläche mit einer Aufnahmeeinheit und die andere äußere Plattenfläche mit je einem oder mehreren Kolbenspannern der Kolbenspanneinheit in Kontakt steht, wobei die Kolbenspanneinheit dazu ausgelegt ist, die plattenförmigen Reaktionszellen oder gestapelten plattenförmigen Reaktionszellen voneinander unabhängig mit einer Presskraft zu beaufschlagen, wobei die Presskraft senkrecht zur Plattenfläche in Richtung der Aufnahmeeinheit wirkt,
wobei die plattenförmigen Reaktionszellen oder gestapelten plattenförmigen Reaktionszellen jeweils eine Mehrzahl von plattenförmigen Funktionselementen umfassen, wobei es sich bei den plattenförmigen Funktionselementen um Katalysatorschichten, Gasdiffusionsschichten, bipolare Platten, Protonenaustauschmembranen handelt, wobei jede plattenförmigen Reaktionszelle je wenigstens eine Zuleitung für ein Edukt und je wenigstens einer Ableitung für ein Produkt aufweist oder wobei die gestapelten plattenförmigen Reaktionszelle je wenigstens eine Zuleitung für ein Edukt und je wenigstens einer Ableitung für ein Produkt aufweisen.

Die Erfindung betrifft eine Apparatur zur Aufnahme und Fixierung einer Mehrzahl von plattenförmigen Reaktionszellen mittels Anpressverschlusssystems. Die plattenförmigen Reaktionszellen weisen jeweils zwei äußere Plattenflächen auf, wobei die eine äußere Fläche der plattenförmigen Reaktionszellen in Kontakt mit einer Aufnahmeeinheit und die andere äußere Fläche der plattenförmigen Reaktionszelle in Kontakt mit einem oder mehreren Kolben eines Kolbenspannelements ist. Durch die Bewegung der Kolben in Richtung der Aufnahmeeinheit wird eine Presskraft auf die plattenförmigen Reaktionszellen ausgeübt, die senkrecht zur Plattenfläche ausgerichtet ist. Die Aufnahmeeinheit bildet somit einen Anschlag gegen den die plattenförmigen Reaktionszellen gepresst werden. Die plattenförmigen Reaktionszellen umfassen unterschiedliche plattenförmige Funktionselemente, die unter anderem auch Elemente mit Dichtungsfunktionen aufweisen und die durch die Presskraft in einer lösbaren Weise gegenüber der Umgebung abgeschlossen werden. Die Innenräume der Reaktionszellen können mit Fluiden versorgt werden, wobei in den Innenräumen auch Elektroden angeordnet sein können, an die eine Spannung angelegt werden kann.

In einer bevorzugten Ausführungsform weisen die Kolbenspanneinheiten ein fluidisches Antriebssystem auf, wobei die Kolbenspanneinheiten durch Leitungen mit einer gemeinsamen Fluidversorgungsleitung oder mit einem gemeinsamen Fluidversorgungstank verbunden sind, wobei die gemeinsame Fluidversorgungsleitung oder Fluidversorgungstank mit einem Druckregelventil verbunden ist, vorzugsweise handelt es sich um ein Equilibar-Ventil, darüber hinaus bevorzugt handelt es sich um ein Pneumatik- oder Hydraulikfluid, wobei in den Leitungen zur gemeinsamen Fluidversorgungsleitung oder dem gemeinsamen Fluidversorgungstank Schaltventile angeordnet sind, wobei mittels Betätigung der Schaltventile der Fluidstrom durch die Fluidleitung zu den Kolbenspanneinheiten zu- oder abgeschaltet werden kann. Zuschalten bedeutet Öffnen der Fluidleitung und Abschalten bedeutet unterbrechen der Fluidleitung.

Vorzugsweise handelt es sich bei den Kolbenspannern um Einschraubkolbenspanner.

Vorzugsweise weist der Druckregler kurze Einschwingzeiten auf. Vorzugsweise sind die Einschwingzeiten < 10 Sekunden, insbesondere bevorzugt < 1 Sekunde, darüber hinaus bevorzugt < 0,5 Sekunden. Gleichzeitig mit den kurzen Einschwingzeiten weist der Druckregler einen großen dynamischen Regelbereich auf im Bereich von 1 bis 500 barg, bevorzugt 5 bis 50 barg, wobei der Druckregler durch eine hohe Sensitivität gekennzeichnet ist, und in der Lage ist, Druckänderungen < 500 mbarg zu detektieren, insbesondere < 250 mbarg.

Die plattenförmigen Reaktionszellen werden einzeln von den Kolben der Anpressvorrichtung angesteuert. In einer bevorzugten Ausführungsform werden die Kolben des Kolbenspannelements durch einen fluidischen Antrieb bewegt, weiter vorzugsweise umfasst der Fluidantrieb eine Hydraulikflüssigkeit beziehungsweise handelt es sich um einen Hydraulikantrieb. Es ist bevorzugt, dass Versorgungsleitungen der Kolben mit Ventilen ausgestattet sind. Durch die Ventilsteuerung kann die Verbindung zu den Versorgungsleitungen der einzelnen Kolben selektiv unterbrochen werden und die plattenförmigen Reaktionszellen von den Versorgungsleitungen abgekoppelt werden. Nach dem Unterbrechen und Abkoppeln können die ausgewählten plattenförmigen Reaktionszellen aus der Anpressvorrichtung entnommen werden. Die plattenförmigen Reaktionszellen können ausgetauscht werden oder es können auch einzelne Elemente der plattenförmigen Reaktionszellen ausgetauscht werden. Vorzugsweise sind die fluidischen Versorgungsleitungen an eine Hauptleitung angeschlossen, die mit einem gemeinsamen Druckregler versehen ist, wobei es sich weiter vorzugsweise um einen Equilibar-Druckregler handelt. Aufgrund des gemeinsamen Druckreglers werden die einzelnen Kolben, die Presskraft auf die plattenförmigen Reaktionszellen ausüben, über die fluidischen Versorgungsleitungen mit dem Druckregler in Verbindung stehen mit dem gleichen Solldruck angesteuert.

Die Weiterleitung der fluidischen Antriebskraft zu den Spannern kann baulich realisiert sein durch einen Manifold in dem die Leitungen realisiert sind als eine Abfolge von gebohrten oder im 3D Druck hergestellten Kanälen, die zusammen mit den darin enthaltenen Ventilen und Einschraubkolben einen Körper bilden, der angeschlossen ist an die gemeinsame Versorgung. Die Weiterleitung kann auch realisiert sein als eine Abfolge von Rohrleitungen, die Ventile und Spanner verbinden, die ebenfalls angeschlossen sind an die gemeinsame Versorgung. Beide Varianten sind funktional gleichwertig, die Manifoldvariante kann zusätzlich Kräfte übertragen also beispielsweise den Teil eines Rahmens bilden, der in beiden Varianten notwendig ist, um die fluidisch erzeugte Kraft - und die sich ergebenden Gegenkräfte - zuhalten.

Es soll hier erwähnt werden, dass die Kräfte auch elektrisch durch entsprechende Antriebe und Getriebe aufgebracht werden können.

In einer bevorzugten Ausführungsform werden die fluidischen Versorgungsleitungen aus einem Druckgefäß versorgt, an das ein Druckregler sowie eine weitere fluidische Versorgungsleitung für ein kompressionsweiches Fluid angeschlossen sind. Bei dem kompressionsweichen Fluid handelt es sich beispielsweise um ein Gas. Der Vorteil dieser Anordnung ist, dass die Druckreglung sehr genau über das kompressionsweiche Fluid erfolgen kann, während die Presskraft über ein kompressionssteifes Fluid z.B. eine Flüssigkeit ausgeübt wird. Letzteres hat den weiteren Vorteil, dass in dem mit dem kompressionssteifen Fluid gefüllten und mit den Schaltventilen abgesperrten Volumen in den Fluidleitungen bereits kleinste Änderungen in der Ausdehnung oder Nachgiebigkeit der Reaktionszelle detektiert werden können. Damit eignet sich auch eine Druckmessung an diesem eingeschlossenen Volumen als Detektionsmethode für kleine Ausdehnungen oder Nachgiebigkeiten, z.B. der den Reaktionsraum abschließenden Dichtung.

Weiter bevorzugt kann die Presskraft der Kolben auch auf einen Stapel aus plattenförmigen Reaktionszellen ausgeübt werden, so dass es möglich ist eine Mehrzahl von Stapeln an plattenförmigen Reaktionszellen in der Apparatur aufzunehmen. In einer weiter bevorzugten Ausführungsform kann die Aufnahme von mehreren einzelnen plattenförmigen Reaktionszellen mit der Aufnahme von Stapeln aus plattenförmigen Reaktionszellen kombiniert werden. Ein Vorteil ist die Flexibilität der Apparatur in der Anordnung an plattenförmigen Reaktionszellen. Bei der Verwendung von plattenförmigen Reaktionszellen mit vorgegebenen Dimensionierungen ist eine konstruktive Abänderung der Apparatur sehr einfach möglich, so dass es dem Betreiber der Apparatur einfach möglich ist, die erfindungsgemäße Apparatur für eine Vielzahl an unterschiedlichen Prozessen einzusetzen. Somit stellt die erfindungsgemäße Apparatur eine Multifunktionsapparatur dar, die aufgrund der Flexibilität in der Handhabbarkeit von großem technischem Interesse ist.

Die plattenförmigen Reaktionszellen umfassen schichtförmige oder plattenförmige Funktionselemente, die austauschbar sind. Dadurch können diejenigen Elemente, die Abnutzungserscheinungen aufweisen, besonders einfach ausgetauscht werden. Der Begriff Abnutzung kann auch eine gezielte Herbeiführung von Korrosion bedeuten, wobei das Verfahren dazu verwendet wird, um die Bedingungen, denen Materialien im realen Betrieb ausgesetzt sind, im Labor nachzustellen beziehungsweise zu simulieren. Dazu zählen Oberflächenschäden an Elektroden aber auch Schäden an Rohr- oder Behältermaterialien, Dichtungen oder Membranen. Darüber hinaus können die Elemente einer Reaktionszelle in unterschiedlichen Konfigurationen kombiniert werden, wodurch sehr viele unterschiedliche Prozesse durchgeführt werden können. Daran lässt sich auch die große Leistungsfähigkeit der erfindungsgemäßen Apparatur erkennen. Die plattenförmigen Reaktionszellen können parallel oder seriell betrieben werden. Es können somit mehrstufige Prozesse in seriell verknüpften Reaktionszellen durchgeführt werden oder es können Untersuchung zur Aufskalierung von Prozessen in parallel verknüpften Reaktionszellen durchgeführt werden. Somit weist die Apparatur eine sehr hohe Vielseitigkeit auf, die sehr leistungsfähig ist, da Umbau- und Ausbauarbeiten auf der Basis der individuellen Abdichtungen der plattenförmigen Reaktionszellen sehr einfach in der Handhabbarkeit sind. Somit kann die erfindungsgemäße Apparatur sehr gut für Screenings und Optimierung von Prozessbedingungen eingesetzt werden, die bisher existierende Apparaturen auch aufgrund von Handhabbarkeit und Flexibilität in den Leistungseigenschaften übertrifft. Die erfindungsgemäße Apparatur hat einen großen technischen Nutzen, da sie die Grundlage darstellt, um 1. diejenigen chemischen Prozesse zu optimieren, die auf dem Einsatz von elektrischem Strom zur Synthese von chemischen Verbindungen basieren, und um 2. diejenigen chemischen Prozesse zu optimieren, bei denen chemische Verbindungen und Moleküle als Brennstoff in elektrischen Strom umgewandelt werden. Die hierbei in Erscheinung tretende Korrosion an den Elektroden oder in den Innenwänden der Reaktionszellen oder an den Funktionselementen ist Teil der elektrochemischen Prozesse, die einer gezielten Untersuchung und Optimierung unterzogen werden. Die Verbesserung der großtechnischen Prozesse unter Verwendung von regenerativen Energiequellen in Kombination mit neuer Prozesstechnologie kann und wird dazu beitragen, die CO₂-Emissionen der chemischen Industrie noch weiter zu reduzieren. Die erfindungsgemäße Apparatur stellt ein leistungsfähiges Werkzeug bereit, die chemischen Prozesse zu optimieren. Die Optimierung ist zeitsparend, durch modulare Strukturelemente in Kombination mit einer Anpresspressvorrichtung, die es ermöglicht, einzelne plattenförmige Reaktionszellen individuell abzudichten und einzeln auszutauschen und die einfach zu bedienen ist.

In einer bevorzugten Ausführungsform ist die Kolbenspanneinheit des Verschlusssystems dadurch gekennzeichnet, dass dieses einen Kolbenspanner pro plattenförmiger Reaktionszelle beziehungsweise einen Kolbenspanner pro Stapel an plattenförmigen Reaktionszellen aufweist. Die Dimensionierung und Spannleistung des eingesetzten Kolbenspanners sind in der Weise auf die Dimensionierung der plattenförmigen Reaktionszelle abgestimmt, dass die erfindungsgemäße Apparatur nur eine geringe Anzahl von Kolbenspannern aufweist, wodurch die Komplexität reduziert und die Handhabbarkeit der Apparatur verbessert wird. Eine reduzierte Komplexität und die verbesserte Handhabbarkeit ist von Bedeutung, da die erfindungsgemäße Apparatur zur Aufnahme einer großen Anzahl von plattenförmigen Reaktionszellen eingesetzt werden kann. Vorzugsweise liegt die Anzahl an plattenförmig Reaktionszellen, die gleichzeitig beziehungsweise parallel in der Apparatur angeordnet und unabhängig mit Kolbenspannern angepresst werden können im Bereich von 2 bis 50, weiter vorzugsweise im Bereich von 2 bis 40, darüber hinaus bevorzugt im Bereich von 4 bis 20.

Vorzugsweise ist an der Spitze von jedem Kolben der Kolbenspanner ein Kraftverteilerelement angeordnet, vorzugsweise weist Kraftverteilerelement ein Kugellager auf, das mindestens eine Kugel aufweist und leichte Abweichungen in der Parallelität der Kolbenstirnfläche und der Reaktionszellenaußenfläche ausgleicht. Das Kraftverteilerelement bietet den Vorteil, dass die Presskraft gleichmäßig auf das oder die Dichtungselemente übertragen wird, durch welche der Innenraum der plattenförmigen Reaktionszellen gegenüber dem Außenraum abgedichtet wird.

In einer bevorzugten Ausführungsform handelt es sich bei den plattenförmigen Reaktionszellen um plattenförmige Reaktionszellen zur Durchführung von elektrochemischen Verfahren, die ausgewählt sind aus der Gruppe: Elektrolysezelle, galvanische Zelle, Brennstoffzelle, Korrosionstest, durchströmte Batterien, Redoxflow-Batterien, z.B. Vanadium-Redox-Batterien. Weiter vorzugsweise umfasst eine plattenförmige Reaktionszelle zumindest zwei Halbzellen, die durch eine Trennwand getrennt sind. Je nach Ausführungsform kann eine Reaktionszelle auch mehrere Eduktzuleitungen und Produktableitungen aufweisen.

Eine als Elektrolysezelle oder galvanische Zellen ausgestaltete plattenförmige Reaktionszelle weist eine Trennmembranen und Elektroden auf, wobei die Reaktionszelle durch die Trennmembran in Halbzellen unterteilt wird, wobei die Elektroden an elektrische Versorgungsleitungen angeschlossen sind. Insbesondere bevorzugt sind die die plattenförmigen Reaktionszellen als Elektrolysezellen ausgestaltet, wobei es bevorzugt ist, dass die Elektroden an Strom- und Spannungsmessgeräte angeschlossen sind, weiter vorzugsweise umfassen die Apparatur online-Analysegeräte aus der Gruppe online-Voltammetrie zur Messung von V/A-Funktionen, die Impedanzspektroskopie zur Messung hochfrequenter Spannungswechsel. Mittels der erfindungsgemäßen Apparatur lassen sich sehr genaue Messungen durchführen, wobei die Apparatur durch Flexibilität und Genauigkeit gekennzeichnet ist. Eine Kombination von den elektrochemischen Untersuchungsmethoden mit einer Sensorüberwachung der Dichtungssystem der plattenförmigen Reaktionszellen bietet hier Synergien, die daraus resultiert, dass die Sensorüberwachung in der Lage ist, Veränderungen der plattenförmigen Reaktionszellen zu erkennen, die mit den elektrochemischen Daten korreliert werden können. Dadurch lassen sich Störeffekte identifizieren, die zu Änderungen von elektrochemischen Messdaten führen.

In einer bevorzugten Ausführungsform weist jede plattenförmige Reaktionszelle zumindest eine Zuleitung und zumindest eine Ableitung auf, durch welche Versorgungsmedien zugeführt und Produktmedien abgeleitet werden. Die plattenförmige Reaktionszelle kann in der Mitte eine Trennwand aufweisen, wobei die Trennwand die Zelle in Halbzellen unterteilt, wobei jede Halbzelle zumindest eine Zuleitung und zumindest eine Ableitung aufweisen kann.

In einer weiteren Ausführungsform kann nur eine der beiden Halbzellen eine Zuleitung aufweisen, wobei beide Halbzellen zumindest eine Ableitung aufweisen. Eine der Halbzellen kann auch zwei Ableitungen aufweisen, wobei eine Ableitung für die Ableitung von flüssigen Fluiden und die andere Ableitung zur Ableitung von gasförmigen Fluiden vorgesehen ist. Die Ableitung kann auch einen Kondensor zusammen mit einer Rückführungsleitung aufweisen, wobei im Kondensor die flüssigen Fluide von den gasförmigen Fluiden abgetrennt und über die Rückführungsleitung zu der Zuleitung geführt werden. Rückgeführtes Fluid kann dann gemeinsam mit frischem Fluid in den Innenraum der Reaktionszelle geleitet werden.

Als Grundkörper weisen die plattenförmigen Reaktionszellen Gehäuseplatten auf, die die Funktionselemente umschließen. Die Gehäuseplatten umfassen die Verbindungen zu den Zuleitungen und Ableitungen für Fluide sowie auch die die Verbindungen zu den elektrischen Verbindungsleitungen. Die Verbindungen zu den Zuleitungen und Ableitungen oder auch die elektrischen Verbindungen können durch die Grundflächen oder durch die Seitenflächen der Gehäuseplatten geführt werden. Die strukturelle Anordnung der Verbindungen hängt davon ab, welche Dimensionierung die plattenförmigen Reaktionszellen aufweisen und in welcher strukturellen Umgebung die plattenförmigen Reaktionszellen angeordnet sind. In der Umgebung der plattenförmigen Reaktionszellen können Temperierungselemente vorhanden sein, um die plattenförmigen Reaktionszellen bei hohen Temperaturen zu betreiben. Es können Kühlelemente vorgesehen sein, um die Abkühlprozesse der plattenförmigen Reaktionszellen zu beschleunigen. Die plattenförmigen Reaktionszellen können mit Temperaturmesssensoren ausgestattet sein.

Es ist bevorzugt, dass die Verbindungen zu den Zuleitungen und Ableitungen für Fluide mit Anschlusselementen versehen sind, die eine gute Handhabbarkeit aufweisen, um einzelne platten-förmige Reaktionszellen in kurzen Zeiträumen austauschen zu können. Somit ist es besonders bevorzugt, dass die Verbindungen mit Schnellkupplungselementen ausgestattet sind. Beispielsweise sind diejenigen Schnellkupplungselemente besonders geeignet, die von der Firma Stäubli stammen.

In einer bevorzugten Ausführungsform sind der Kolben oder das Kraftverteilerelement mit einem Sensor ausgestattet, der eine geometrische Veränderung der Reaktionszelle während der Reaktion messen kann, Sensoren sind (indirekte) Kraftmesssensoren oder (direkte) Messsensoren wie Dehnungsmessstreifen, Abstandsdetektoren wie Ultraschall-, optische Lichtschranken oder Interferenzmethoden. Die Sensormessung bietet den Vorteil, dass die Abnutzung der Dichtungselemente überwacht und kontrolliert werden kann. Die direkte Messung als geometrische Veränderung der Reaktionszelle hat den Vorteil gegenüber der zuvor beschriebenen indirekten Messung über den Hydraulikdruck, dass die Messung kontinuierlich durchgeführt werden kann, wohingegen die Messung des Hydraulikdruck immer in Kombination mit der Einstellung der Schaltventile verbunden ist.

Bei den Parametern, die die Langzeitleistungsfähigkeit beeinflussen, ist zwischen stofflichen und verfahrenstechnischen Parametern zu unterscheiden. Bei den stofflichen Parametern handelt es sich um die mechanische und chemische Beständigkeit der Funktionselemente. Dazu gehört die Oberflächenbenetzbarkeit der Gasdiffusionsschicht, das Druckverhalten der Gasdiffusionsschicht, die Ionenleitfähigkeit der Membran, Stabilität der Dichtungselemente. Bei den verfahrenstechnischen Parametern handelt es sich um die Prozessbedingungen, die für die Durchführung des Verfahrens gewählt werden. Dazu gehören der Prozessdruck, die Prozesstemperatur, und die Schwankungsbereiche, die beim Betrieb der Reaktionszelle bei den verfahrenstechnischen Parametern angewendet werden, die Reaktionszeiten, mit denen die Änderungen der Betriebsbedingungen erfolgen. In einer bevorzugten Ausführungsform des Verfahrens werden die parallel angeordneten Reaktionszellen einer Presskraft ausgesetzt, die durch einen gemeinsamen Druckregler aufgeprägt wird. Dabei muss die Presskraft, die zum Abdichten der einzelnen plattenförmigen Reaktionszelle aufgebracht werden, größer sein als der Druck im Innenraum der einzelnen Reaktionszellen. Ein Aspekt ist auch, dass die einzelnen plattenförmigen Reaktionszellen gleichzeitig bei unterschiedlichen Betriebsbedingungen verwendet werden können. Die einzelnen Funktionselemente können hierdurch ein unterschiedliches Abnutzungsverhalten aufweisen. In einer bevorzugten Ausführungsform sind die plattenförmigen Reaktionszellen mit Kraftsensoren ausgestattet, die die Presskraft in Abhängigkeit von der Zeit aufzeichnen. Die Ausstattung der plattenförmigen Reaktionszellen mit Kraftsensoren ist vorteilhaft, da es möglich ist, den Betrieb der einzelnen Reaktionszellen zu kontrollieren und die Kontrolldaten zu registrieren sowie auch den untersuchten Prozess in Verbindung mit einer Rückkopplung vorzunehmen.

Bei den Betriebsweisen der Prozesse kann zwischen Break-in- und Alterungs-Prozess-verfolgung unterschieden werden. Diese Betriebsweisen können als Vorgabeprozesse an eine automatisierte Testanlage in Form von Protokollen mit einer definierten Abarbeitungsliste übergeben werden. In dieser Abarbeitungsliste sind dann die verfahrenstechnischen und elektrischen Vorgaben an die Testanlage als Zeitreihe definiert. Break-in Protokolle können dabei so definiert werden, dass nach Abarbeitung der Liste eine gewünschte Leistung der Reaktionszelle erhalten wird. Protokolle der Prozessverfolgung kann so definiert sein, dass übliche oder auch seltene Betriebszustände einer Reaktionszelle eingestellt werden und beispielsweise ihre Leistung unter diesen Betriebszuständen verfolgt wird. Als Betriebszustände können Lastwechselzustände - wie Anfahren oder Abfahrten einer Reaktionszelle - enthalten sein. Die Untersuchung des Langzeitverhaltens einer Reaktionszelle kann unter verschärften Betriebsbedingungen vorgenommen werden, wobei die dazu verwendeten Protokolle erhöhte Betriebstemperaturen oder hohe Lastwechselfrequenzen aufweisen können.

In einer bevorzugten Ausführungsform weisen eine oder mehrere der plattenförmigen Reaktionszellen einen oder mehrere Sensoren auf, die mit Stellen im Innenraum der Reaktionszellen verbunden sind, wobei es sich bei den Sensoren um solche für die Durchführung von in-situ-Messmethoden handelt, welche ausgewählt sind aus der Gruppe elektrochemische Dilatometrie zur Charakterisierung der Dickenänderung von Elektroden, lichtmikroskopische Charakterisierung oder spektroskopische Charakterisierung mittels Glasfasern zu Elektroden oder Membranen. Die Überwachung des Innenraums der plattenförmigen Reaktionszellen während des Prozesses ist von Vorteil, um eine verbesserte Prozessoptimierung zu gewährleisten. Es ergeben sich Synergieeffekte, da die verbesserte Überwachung auch mit einer verbesserten Testnutzungszeit gekoppelt ist, die durch die individuelle Verschließbarkeit und der daraus resultierenden Austauschbarkeit gegeben sind. Diese Synergieeffekte sind auch bei der Hochdurchsatzforschung von Bedeutung, da unterschiedliche Prozessbedingungen gleichzeitig getestet werden können. Die plattenförmigen Reaktionszellen, die besonders anspruchsvollen Prozessbedingungen - beispielsweise in Bezug auf Temperatur oder auch in Bezug auf die Zusammensetzung von Funktionselementen - unterzogen werden, können daher einzeln getauscht werden.

In eine bevorzugten Ausführungsform der Apparatur liegen die Aufnahmeeinheiten als körperlich separate Einheiten oder als eine körperlich verbundene Einheit vor. Im Fall, dass die Aufnahmeeinheiten als körperlich separate Einheiten vorliegen, weist jede Aufnahmeeinheit einen eigenen Halterahmen auf, der mit je einer Kolbenspanneinheit verbunden ist. Im Fall, dass die Aufnahmeeinheiten als eine körperlich verbundene Einheit vorliegen, weisen die Aufnahmeeinheiten einen gemeinsamen Halterahmen auf, wobei es bevorzugt ist, dass die Kolbenspanneinheiten in einem gemeinsamen Element angeordnet sind, wobei der gemeinsame Halterahmen die Aufnahmeeinheiten und das gemeinsame Element verbindet. Der gemeinsame Halterahmen kann von Vorteil sein, um eine Stabilisierung der Apparatur gewährleisten. Die getrennten Halterahmen können von Vorteil sein, um die Einheiten in verteilten Stellen zu positionieren. Denkbar ist auch die Kombination von Gruppen von plattenförmigen Reaktionszellen, die in einer Apparatur vorliegen, wobei die Apparatur beispielsweise zwei separate Einheiten aufweist und eine Gruppe mit einem gemeinsamen Haltrahmen aufweist.

In einer bevorzugten Ausführungsform der Apparatur weisen die plattenförmigen Reaktionszellen eine innere benetzte Plattenfläche auf, die im Bereich von 1,5 x 1,5 cm² bis 30 x 30 cm² liegt, vorzugweise liegt die innere Plattenfläche bei 2,0 x 2,0 cm² bis 25 x 25 cm², darüber hinaus bevorzugt liegt die innere Plattenfläche 3,0 x 3,0 cm² bis 15 x 15 cm². Es ist festzustellen, dass die Dimensionierung der plattenförmigen Reaktionszellen auch sehr gering sein kann. Gleichzeitig ist die Anordnung durch eine hohe Genauigkeit gekennzeichnet, da die Funktionselemente mittels Sensoren überwacht werden können, sodass eine Vielzahl von Messdaten erfasst wird. Die äußere größere Plattenfläche ist so dimensioniert, dass fluidische und elektrische Verbindungen angebracht werden können.

Beim Betrieb der einzelnen Reaktionszellen unter hoher Last, werden die Funktionselemente stärkeren Kräften ausgesetzt als bei einer geringen Last. In einer ausgewählten Konfiguration von Reaktionszellen ist die Anwendung einer definierten Kompression beziehungsweise Presskraft von Bedeutung, um eine unkontrollierte Deformation der Diffusionsschicht auszuschließen, die zu einer Änderung der Prozessparameter und der daraus resultierenden Messdaten führen kann. Umgekehrt kann das Verhalten einer Diffusionsschicht unter unterschiedlichen Kompressionsstufen untersucht werden durch Vorgabe einer definierten Last. Hierbei ist durch geeignete Zellgeometrie dafür Sorge zu tragen, dass die (in diesem Falle konstante) Dichtkraft und die (einstellbare) Kompressionskraft der Diffusionsschicht entkoppelt sind. Kräfte, deren Wirklinie aufeinander senkrecht stehen, können voneinander unabhängig sein. Daher verfügt eine zylindrische Reaktionszelle, deren Abdichtung ähnlich einer Kolbendichtung am Inneren der Zylinderwandung erfolgt, ausgestattet mit einer Dehnungsmessung auf der Kolbenstirnfläche, die dann senkrecht zur Zylinderinnenfläche steht, über ein Dehnungsverhalten, das von der Dichtkraft unabhängig ist. Eine weitere Möglichkeit ist das Dehnungsverhalten einer innenliegenden Membran mit einem ebenso innenliegenden Sensor zu messen. Nachteil dieser Methode ist die Kabeldurchführung nach außen. Eine dritte Möglichkeit ist es, einen vernachlässigbaren Innendruck einzustellen über entsprechend dimensionierte Zu- Verteiler- und Ableitungen der Reaktionszelle. Dann erzeugt der vernachlässigbare Innendruck keine Dehnungsänderungen auf die außenliegende Dehnungsmessung der Reaktionszelle, die axial fluchtend mit der Spannvorrichtung erfolgt. Dehnungen, die hier gemessen werden, können nur verursacht sein durch z.B. ein Quellverhalten der innenliegenden Membran.

Der Betrieb bei Ausübung einer konstanten Presskraft kann von Bedeutung sein für die Güte der Messung. Vorteilhaft ist auch, dass die Abschwächung der Dichtungswirkung überwacht werden kann. Mittels der erfindungsgemäßen Apparatur können der Einfluss der Konditionierung und Brüche im Protokoll erfasst und untersucht werden.

In einem Beispiel kann eine plattenförmige Reaktionszelle als Elektrolysezelle ausgelegt sein. Die Apparatur, in der mehrere plattenförmige Reaktionszellen angeordnet sind, wird dann als Elektrolysezelle zur Untersuchung der Zersetzung von Wasser eingesetzt. Hierbei können die separat vorliegenden plattenförmigen Reaktionszellen in einer seriellen Anordnung oder in einer parallelen Anordnung vorliegen. Eine plattenförmige Reaktionszelle, die als Elektrolysezelle ausgelegt ist, umfasst zumindest zwei Halbzellen, die durch eine Membran (Protonenaustauschmembran oder Elektrolyt) getrennt sind.

In einer Ausgestaltungsform kann eine plattenförmige Reaktionszelle als Elektrolysezelle die folgenden Funktionselemente aufweisen: Trennwand, Katalysatorschichten, Diffusionsschichten, Elektrodenschichten, Dichtungselemente. Darüber hinaus umfasst die plattenförmige Reaktionszelle Fluidräume, durch die das zu zersetzende Fluid, im vorliegenden Fall Wasser, geleitet wird. Die plattenförmige Reaktionszelle umfasst zumindest zwei Gehäuseplatten. Die Fluidräume können in die Gehäuseplatten eingelassen sein. In einer bevorzugten Ausführung weisen die Fluidräume eine kanalförmige Struktur auf. Die kanalförmige Struktur verbessert das Verweilzeitverhalten des Fluids, indem jedes Fluidelement durch Führung ganz gezielt auf eine Bahn geleitet wird, wobei es bevorzugt ist, dass der Weg für alle Bahnen möglichst gleiche Länge aufweist. Ein enges Verweilzeitverhalten eines Reaktionsgemischs ist vorteilhaft, da es die Reaktionsausbeute verbessern und den Anteil an Folgereaktionen vermindern kann. Die kanalförmige Struktur kann einen oder mehr als einen Kanal aufweisen. Die Trennwand ist zwischen den beiden Gehäuseplatten angeordnet, wobei in den Randbereichen Dichtungselemente angeordnet sind, die zumindest den Raum gegenüber dem Außenraum abdichten.

Zum Begriff Fluidraum oder Versorgungsraum ist zu sagen, dass die Innenräume der plattenförmigen Reaktionszellen unterschiedlich aufgebaut sein können, weshalb es sich um Versorgungsräume oder Funktionsräume handeln kann.

Die Trennwand ist von beiden Seiten aus von Schichten der Funktionselemente eingefasst, wobei die Trennwand jeweils beidseitig der Wandfläche in Kontakt mit der Katalysatorschicht, der Diffusionsschicht, dem Transport beziehungsweise dem Versorgungsraum und den Elektrodenschichten steht. Die Reihenfolge der Funktionselemente kann von Reaktionszelle zu Reaktionszelle etwas unterschiedlich aufgebaut sein. Beispielsweise ist es möglich, dass Funktionselemente in einer Schicht zusammengefasst sind oder ineinander übergehen. Beispielsweise kann der Katalysator in der Diffusionsschicht angeordnet sein. Die Elektrodenschichten können netzförmig ausgestaltet sein. Darüber hinaus können die Elektrodenschichten auch in der Innenfläche der Gehäuseplatten angeordnet sein.

Im Fall der Apparatur mit plattenförmigen Reaktionszellen zur Zersetzung von Wasser ist zumindest eine Halbzelle der plattenförmigen Reaktionszelle mit einer Zuleitung zur Zufuhr von Wasser ausgestattet. Die Protonen treten durch die Trennwand und werden auf der Kathodenseite in Wasserstoff reduziert. Auf der Anodenseite reagiert das Wasser zu Sauerstoff und Protonen. Auf der Anodenseite wird durch den Fluidraum Wasser und entlang des Fluidkanals ein Gemisch aus Wasser und Sauerstoff geleitet. Auf der Kathodenseite wird durch den Fluidraum Wasserstoff geleitet.

Im Beispiel handelt es sich bei den plattenförmigen Reaktionszellen um Reaktionszellen zur Elektrolyse von Wasser beziehungsweise Elektrolysezellen. Die Halbzellen auf der Anodenseite werden durch das Wasser befeuchtet. Bei den plattenförmigen Funktionselementen handelt es sich um Katalysatorschichten, Gasdiffusionsschichten, bipolare Platten, Protonenaustauschmembrane. Plattenreaktor umfasst mindestens zwei Gehäuseplatten, die plattenförmige Funktionsschichten enthalten, wobei auch Dichtungselemente umfasst sind. Der Begriff bipolare Platten bezeichnet technische Funktionselemente, die eine räumliche Trennung von Reaktionszellen und der elektrischen Versorgung der Elektroden bewirken und die es gleichzeitig ermöglichen, dass die Edukte oder Produkte gleichmäßig in der Fläche verteilt werden.

Vorzugsweise umfassen die plattenförmigen Reaktionszellen jeweils eine Mehrzahl von plattenförmigen Funktionselementen, welche ausgewählt sind aus der Gruppe Katalysatorschichten, Gasdiffusionsschichten, bipolare Platten, Protonenaustauschmembranen, Anionenaustauschmembranen, Separationsmembranen. Mehrzahl bedeutet, dass es sich mindestens um zwei oder mehr Funktionselemente handelt. Die Anzahl der Funktionselemente richtet sich nach der Art und der Konfektionierung der plattenförmigen Reaktionszelle. Es sind auch Ausführungsformen möglich, bei denen zwei oder mehr Funktionselemente in einem kombinierten Element vorliegen. Das bedeutet, dass Funktionselemente innerhalb einer Reaktionszelle durch eine feste Verbindung bereits vorkonfektioniert sind.

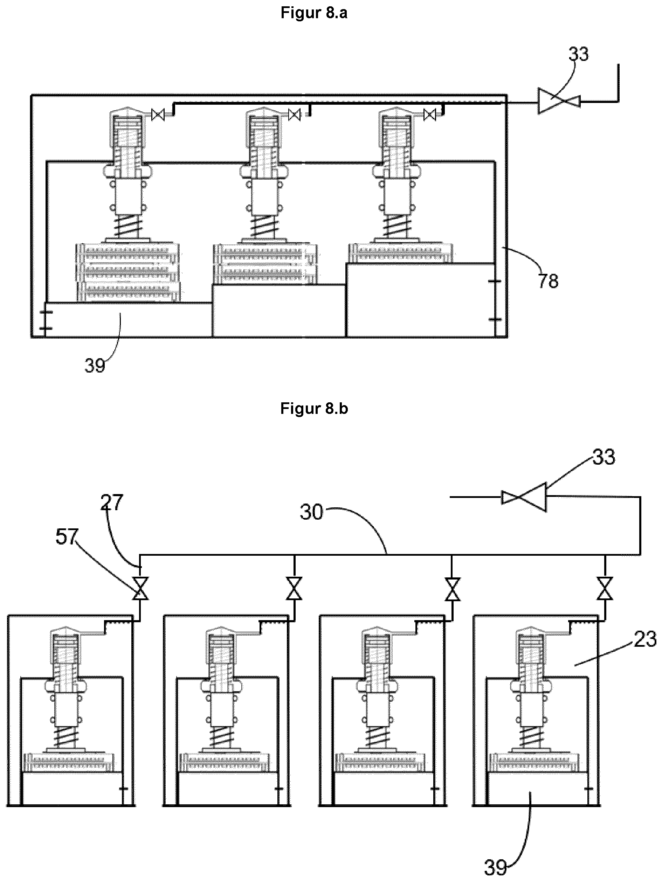

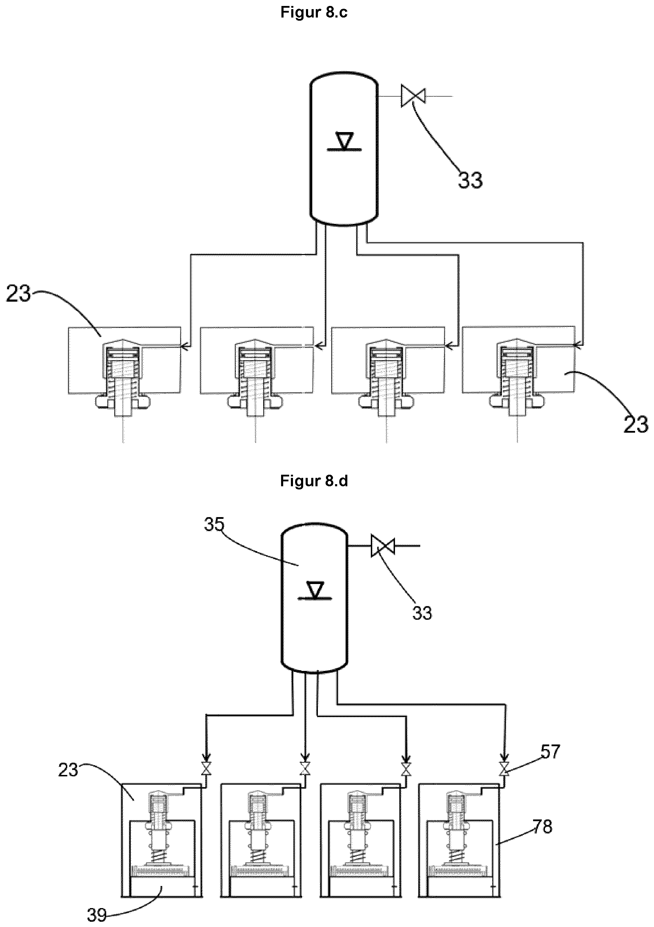

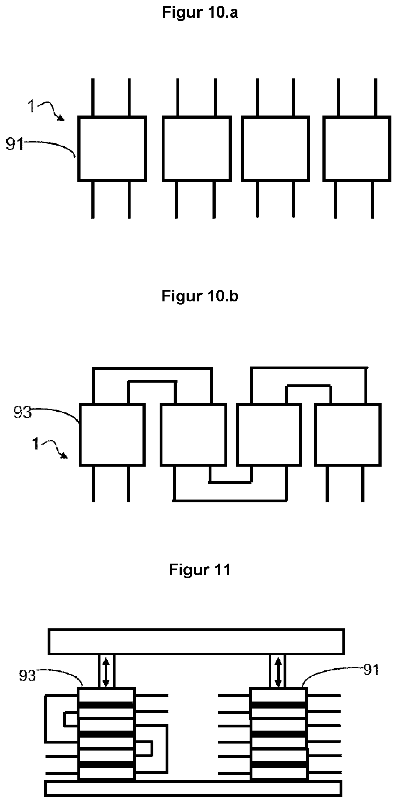

Darüber hinaus sind auch Ausführungsformen möglich, bei der unterschiedliche Arten von plattenförmigen Reaktionszellen in einer modularen Form angeordnet werden. Bei den unterschiedlichen Arten von plattenförmigen Reaktionszellen kann es sich um Elektrolysezellen, Membranzellen, Katalyse-Membranzellen, Redox-Zellen handeln. Diese unterschiedlichen Arten an plattenförmigen Reaktionszellen können in den unterschiedlichen Aufnahmeeinheiten vorliegen, beispielsweise wie dies anhand der schematischen Darstellung von der Apparatur zu erkenn ist, die in Figur 8.a dargestellt ist. Darüber hinaus ist auch eine Ausführungsform möglich, bei der plattenförmigen Reaktionszellen in der gleichen Aufnahmeeinheit vorliegen und eine 4-fach-Zellen-Konfiguration bilden. Diese können in der Apparatur angeordnet sein, die in der Figur 11 dargestellt ist, und zwar auf der linkten Seite.

Die Begriffe Funktionselemente und Funktionsschichten werden synonym verwendet. Dabei ist zu beachten, dass nicht alle Dichtungselemente eine schichtförmige Struktur aufweisen müssen, sondern auch Dichtungsringe oder eckige Dichtungselemente verwendet werden können.

In einer der Ausführungsformen sind einzelne Funktionselemente in die Gehäuseplatten integriert. Bei einer dieser Ausführungsformen sind die Gasdiffusionsschichten fest mit dem Gehäuseelement verbunden. Die Ausführungsform ist dann gegeben, wenn die Funktionselemente in einer definierten Auslegung verwendet werden, die nicht verändert wird und keine signifikante Abnutzung aufweist, so dass ein Tausch dieses Funktionselements nicht erforderlich ist. Bei den Dichtungselementen, die austauschbar oder wiederverwendbar sind, kann es sich um Funktionselemente handeln.

Da die plattenförmigen Reaktionszellen lösbar miteinander verbunden werden, ist es klar, dass die Verbindungen mit Dichtungselementen versehen sind. Die Auswahl und die Beschaffenheit der Dichtungselemente richtet sich nach den jeweiligen Verfahrensparametern oder Prozessbedingungen, bei denen die Reaktionszelle eingesetzt wird.

Ausführungsform des Plattenreaktors als Brennstoffzelle mit Protonenaustauschmembran.

In einer Ausgestaltungsform der Apparatur, bei der die einzelnen plattenförmigen Reaktionszellen mit je einem Kraftsensor in Kontakt stehen, ist es möglich die Anpresskraft der Reaktionszellen zu überwachen und die Untersuchung in einer dynamische Betriebsweise der Zelle durchzuführen. Die Reaktionszellen können mit optischem Anschluss beziehungsweise Zugang zum Innenraum ausgestattet sein. Die Ausstattung des Zellenraums mit Analysemitteln hat den Vorteil, dass der Zelleninnenraum Vor-Ort-Analysen zugänglich gemacht wird, die ausgewählt sind aus der Gruppe UV, IR, NIR, MIR, Laser-Diffraktion, optische Bildgebungsverfahren. Dazu können die Gehäuseflächen der plattenförmigen Reaktionszellen Fensterbereiche aufweisen, die durchlässig sind für Strahlung und die auch Detektionsflächen aufweisen, um die reflektierten Strahlungssignale aufzunehmen.

In einer Ausgestaltungsform sind die Kolben der Kolbenspanner mit zylinderförmigen Stangen versehen, durch die die Abstände zwischen den plattenförmigen Reaktionszellen und dem Antrieb der Kolbenspanner vergrößert werden können. Das hat den Vorteil, dass die plattenförmigen Reaktionszellen auch bei hohen Temperaturen betrieben werden können, da der fluidische Antrieb der Kolbenspanner eine thermische Entkopplung aufweist oder die räumlichen Gegebenheiten vorliegen. Die thermische Entkopplung kann dadurch verbessert werden, dass unterhalb des Antriebs der Kolbenspanner ein Hitzeschild angeordnet wird, mit dem die Strahlungshitze abgeschirmt wird. Das Hitzeschild wird aus einem Material gefertigt, dass die Wärme nicht oder nur kaum leitet. Beispielsweise eine keramische Platte. Davon abgesehen kann der Antrieb der Kolbenspanner mit einer Kühlvorrichtung ausgestattet werden, um eine Übertagung der Wärme von der Beheizungsvorrichtung für die Reaktionszellen auf den Antrieb der Kolbenspanner zu verhindern.

In einer bevorzugten Ausführungsform der erfindungsgemäßen Apparatur sind die Kolben der Kolbenspanner mit Distanzelementen ausgestattet, in einer bevorzugten Ausführungsform umfassen die Distanzelemente ein Wärmeschild oder eine Kühlvorrichtung oder ein Wärmeschild und eine Kühlvorrichtung. Die Kombination aus Distanzelementen in Verbindung mit Wärmeschild und eine Kühlvorrichtung sind vorteilhaft, um die plattenförmigen Reaktionszellen bei hohen Temperaturen zu betreiben.

Die einzelnen plattenförmigen Reaktionszellen sind mit einem Identifikator versehen, und zwar in der Form von Barcode, Zahlencode oder sonstigem Zeichen. In der Programmsteuerung im System wird erfasst, welche Zelle an welcher Stelle eingesetzt wird.

Weiterhin bevorzugt ist eine Ausführungsform der Apparatur, bei der die Aufnahmeeinheiten Trägerelemente in der Form von Nuten, Vertiefungen oder Fächern aufweisen, in denen die plattenförmigen Reaktionszelle beziehungsweise gestapelten plattenförmigen Reaktionszelle positioniert werden, vorzugsweise weisen die Trägerelemente Distanzelemente auf, die mit Mitteln für eine thermische Entkopplung ausgestattet sind. Die Trägerelemente ermöglichen eine hohe Positioniergenauigkeit der plattenförmigen Reaktionszellen.

In einer bevorzugten Ausführungsform sind die Gruppe von plattenförmigen Reaktionszellen oder eine Gruppe von Stapeln mit plattenförmigen Reaktionszellen beziehungsweise eine Gruppe von plattenförmigen Reaktionszellen, die einen oder mehrere Stapel von plattenförmigen Reaktionszellen umfassen, von einer Temperierungsvorrichtung umgeben, wobei es bevorzugt ist, dass die Vorrichtung eine Wärmekammer aufweist, in der mehrere Baueinheiten der Apparatur angeordnet sind, und die weiter bevorzugt unterschiedlichen Baueinheiten weisen jeweils separate Temperierungsvorrichtungen auf.

Es ist anzumerken, dass diejenige Ausgestaltungsform der Apparatur, bei der die Kolbenspanner mit zylinderförmigen Stangen versehen sind, dann besonders bevorzugt ist, wenn die Apparatur zur Untersuchung von Prozessen sich darauf bezieht, dass es sich bei den plattenförmigen Reaktionszellen um keramische Reaktionszellen handelt. Hierbei kann es sich um Hochtemperaturelektrolyse- oder um Hochtemperaturbrennstoffzellen handeln, die auch als Feststoffelektrolysezellen beziehungsweise Solid-Oxid-Electrolyte-Cell (abgekürzt als SOEC) oder als Feststoffbrennstoffzellen beziehungsweise Solid-Oxid-Fuel-Cell (abgekürzt als SOFC) bezeichnet werden.

In einer Ausgestaltungsform können die plattenförmigen Reaktionszellen als Brennstoffzellen ausgelegt sein. In einer weiteren Ausgestaltungsform können die Brennstoffzellen einzelne Stapel aufweisen.

Die erfindungsgemäße Apparatur kann dazu verwendet werden, das Verhalten der Dichtungselemente unter Einwirkung der Presskraft als Funktion der Zeit zur überwachen. Somit können Alterungsprozesse sehr gezielt untersucht werden. Die Untersuchung kann sich auf die Untersuchung der Alterungsprozesse beziehen, die an den Dichtungselementen oder an den Funktionselementen auftreten. Die Untersuchung der Einwirkung der Presskraft wird bevorzugt dann gestartet, sobald die Reaktionszellen konstante Betriebsbedingungen erreicht haben, damit die temperaturbedingte Längendehnung der Reaktionszellen nicht fälschlicherweise als Dehnungen oder Nachgiebigkeit flexibler Bauelemente (Dichtungen, Membrane) interpretiert wird. Daher befinden sich die Reaktionszellen und der Pressapparat auch in einer Temperierkammer beziehungsweise in einer Ofenkammer.

In einer Ausführungsform kann die Apparatur dazu verwendet werden, die Prozesse, die in den plattenförmigen Reaktionszellen durchgeführt werden, in einer periodischen Betriebsweise durchzuführen, wobei einzelne Messzyklen auch wiederholt werden können.

Aggregatstrukturen und Einteilung in Funktionselemente: gegeben durch Gehäuseplatten, Fluidverteilerplatten, Elektroden und zentrales Membranaggregat mit austauschbaren oder wiederverwendbaren Dichtungselementen. Die Reaktionszellen können einen stufenförmigen Aufbau aufweisen. Bei diesem stufenförmigen Aufbau ist das Membranaggregat im Zentrum der Reaktionszellen zwischen den zwei Gehäuseplatten, wobei das Membranaggregat auf einer Seite der Membran oder auch auf beiden Seiten der Membran mit Katalysatorschichten bedeckt sein kann. Das mit Katalysator beschichtete Membranaggregat stellt ein katalytisches Membranaggregat dar. Das Membranaggregat, das mit Katalysatorschichten bedeckt ist, kann beidseitig mit Schichten aus Diffusionselementen, vorzugsweise Gasdiffusionselementen, bedeckt sein. Diffusionselemente sind dadurch gekennzeichnet, dass sie eine Polarität und eine Porosität aufweisen, die den Prozess verbessern, da sie teilweise den Durchtritt von gewünschten Komponenten bevorzugen sowie den Austrag von Reaktionsprodukten befördern.

In einer Ausgestaltungsform können die Membranen der Reaktionszellen als Membran-Aggregate (im Rahmen der vorliegenden Schrift abgekürzt als MA) beziehungsweise als Membran-Elektroden-Aggregate (im Rahmen der vorliegenden Schrift abgekürzt MEA) ausgestaltet sein.

Die Verwendung von Membran-Elektroden-Aggregaten oder Membran-Aggregaten kann zweckmäßig sein, wenn Bauteile kostengünstig als Aggregate gefertigt werden können oder wenn die chemischen Prozesse besonders effizient durchgeführt werden können.

Membran-Aggregate beziehungsweise Membranaggregate sind vorteilhaft in der Anwendung, da sie zu einer häufig gewünschten Funktionstrennung in Bauelemente mit aktivem und nicht aktivem Charakter beitragen, die mit unterschiedlichen Methoden gefertigt werden können. Nicht-aktive Bauelement sind beispielsweise strömungsführende Bauelemente oder Dichtungen. Aktive Bauelemente sind solche, die aktiv an der chemischen Umsetzung oder Stoffzusammenführung oder Stofftrennung teilnehmen. Bauelemente, die an der chemischen Umsetzung teilhaben, sind katalytisch beschichtete Bauelemente. Bauelemente, die an der Stoffzusammensetzung Veränderungen vornehmen, sind beispielsweise Membranen. Diese sind häufig funktionalisiert, wobei sich eine Funktionalisierung auf die Oberflächen der Membranen beziehen kann, wodurch beispielsweise das Benetzungsverhalten reguliert werden kann. Die nicht-aktiven Bauelemente können mit Methoden der Produktionstechnik wie Strukturieren, Schneiden, Stanzen, Filmextrusion, Foliengießen, etc. hergestellt werden. Aktive-Bauelemente können zusätzlich mit chemisch aktiven Komponenten behandelt werden. Dazu zählen unter anderem Spray Coating, Rakel Coating, Sputter Coating, CVD Coating, Sol-gel Coating, Imprägnierung. Die fertige Zelle wird dann aus aktiven und nicht-aktiven Bauelementen zu einem Membranaggregat zusammengestellt.

Zum strukturellen Aufbau von Membran-Aggregaten ist zu sagen, dass die Membran ein zentrales Bauelement darstellt, das primär als ionenleitende Schicht fungiert und in einer bevorzugten Ausführungsform auch einen Katalysator oder eine katalytische Schicht auf zumindest einer oder beiden Seiten umfasst.

Plattenförmigen Reaktionszellen mit Gehäuse und Dichtungselementen, Anschlüsse, Zuleitungen und Ableitungen für Gase und Flüssigkeiten, elektrische Anschlüsse.

Zur Illustration der Erfindung werden strukturelle Ausgestaltungsformen von plattenförmigen Reaktionszellen beschrieben, die in Verbindung mit der Apparatur zur Untersuchung von chemischen Prozessen verwendet werden können. Es können verschiedene plattenförmige Reaktionszellen hergestellt werden, die aus unterschiedlichen Konfigurationen von Membran-Aggregaten resultieren.

In einer Ausgestaltungsform kann die plattenförmige Reaktionszelle als Brennstoffzelle (Solid-Oxid-Fuel-Cell beziehungsweise SOFC) ausgestaltet sein, die eine lonenaustauschmembran als zentrales Trennelement aufweist. Die lonenaustauschmembran ist auf beiden Seiten der Trennschicht mit einer porösen katalytischen Schicht bedeckt, wobei die porösen katalytischen Schichten von Diffusionsschichten bedeckt sein können.

In einer weiteren Ausgestaltungsform umfasst die katalytische Schicht von Fuel-Cells ein kohlenstoffhaltiges oder graphithaltiges Material oder ein Material, das kohlenstoffhaltig und graphithaltig ist, auf dessen Oberfläche Aktivkomponenten oder Aktivelemente abgeschieden sein können. Das kohlenstoffhaltige Material beziehungsweise das graphithaltige Material weist Agglomerate auf, deren Größe im Bereich von 40 bis 100 nm liegen. Die Agglomerate können kohlenstoffhaltige oder graphithaltige Primärteilchen umfassen, die eine Größe im Bereich von 10 bis 30 nm aufweisen. Die Aktivkomponenten oder Aktivelemente befinden sich auf der Oberfläche der Primärteilchen und weisen eine Größe auf, die im Bereich von 2 bis 5 nm liegen kann. Die einzelnen Agglomerate können von einer Polymermembran umhüllt sein. In einer bevorzugten Ausführungsform für niedrige Temperaturen (< 200°C, (< 473,15 K) handelt es sich bei der Polymermembran um eine Nafion-Membran. Nafion ist ein Handelsnamen für ein Polymermaterial von der Firma DuPont, wobei es sich um ein sulfoniertes Tetrafluorethylen-Polymer (PTFE) handelt. Als Elektroden kann ein Drahtnetz vorliegen, wobei das Drahtnetz im Bereich zwischen der porösen katalytischen Schicht und der Diffusionsschicht oder innerhalb der katalytischen Schicht oder zwischen der katalytischen Schicht und der Protonenaustauschmembran angeordnet sein kann. Vorzugsweise liegt die Schichtdicke der Protonenaustauschmembran im Bereich von 0,5 mm bis 10 mm, weiter vorzugsweise im Bereich von 1 mm bis 8 mm. Vorzugsweise liegt die Dicke der porösen katalytischen Schicht im Bereich von 50 µm bis 1000 µm, weiter vorzugsweise im Bereich von 100 µm bis 250 µm. Vorzugsweise weist die Diffusionsschicht eine Schichtdicke auf, die im Bereich von 50 bis 250 µm liegt. An die Fläche der Diffusionsschicht verläuft der Fluidraum, durch den der Brennstoff beziehungsweise die Arbeitsfluide transportiert werden.

Ein Aspekt der erfindungsgemäßen Apparatur betrifft die Möglichkeit der Hochskalierung der Versuchsanordnung, die dadurch bewirkt werden kann, dass die Oberfläche bei Membranen in sehr einfacher Weise vergrößert werden kann. Die plattenförmigen Reaktionszellen können in unterschiedlichen Dimensionen vorliegen, die jeweils in der gleichen Apparatur mit der Anpressvorrichtung eingesetzt werden können. Somit können die plattenförmigen Reaktionszellen, die eine geringere Abmessung aufweisen, gegen größere plattenförmigen Reaktionszellen ausgetauscht werden. Darüber hinaus können die einzelnen plattenförmigen Reaktionszellen auch in Stapeln aus plattenförmigen Reaktionszellen angeordnet werden, wobei die plattenförmigen Reaktionszellen in einer seriellen Anordnung geschaltet werden können, so dass sich die Membranflächen der einzelnen Zellen zu einer gesamten Membranfläche aufsummieren lassen. Dadurch können Daten zur Hochskalierung gesammelt werden, ohne dass hierbei die Verwendung einer anderen Vorrichtung notwendig ist, weshalb die Nutzung der erfindungsgemäßen Apparatur die Entwicklung bei der Hochskalierung sehr effizient und Ressourcen-schonend ist.

In einer Ausgestaltungsform kann die plattenförmige Reaktionszelle als Feststoffelektrolysezelle (als sogenannte SOEC) verwendet werden.

Die erfindungsgemäße Apparatur zur Untersuchung von plattenförmigen Reaktionszellen kann Teil einer modularen Plattform darstellen, die die nachfolgenden Module umfasst:
- Zentraler Schaltschrank mit Versorgungseinrichtung;
- Versorgungseinrichtung für Gas und Flüssigkeiten;
- Reaktionsmodul mit Apparatur zur Aufnahme und zur Fixierung einer Mehrzahl von plattenförmigen Reaktionszellen;
- mitlaufenden Analyseeinrichtungen beziehungsweise online-Analyse-Einrichtung; sowie eine Steuervorrichtung.

Die Erfindung betrifft auch ein Verfahren zur Untersuchung von plattenförmigen Reaktionszellen mittels der erfindungsgemäßen Apparatur.

Verfahren zur Untersuchung von chemischen Prozessen in plattenförmigen Reaktionszellen mittels einer Apparatur, die Gegenstand der vorliegenden Beschreibung ist, wobei das Verfahren die nachfolgenden Schritte umfasst:
- mehrere plattenförmige Reaktionszellen werden mit der äußeren Plattenfläche auf der Oberseite von Aufnahmeeinheiten positioniert, vorzugsweise in der Weise, dass die Reaktionszellen eine waagrechte Orientierung und lineare Anordnung auf der Oberseite der Aufnahmeeinheiten aufweisen und aufgrund der Schwerkraft getragen werden;
- Verpressen der plattenförmigen Reaktionszellen mittels Kolbenspanner, wobei ein oder mehrere Kolbenspanner pro plattenförmiger Reaktionszelle auf die äußere Plattenfläche der einzelnen Reaktionszellen eine Presskraft ausübt, die senkrecht zur Plattenfläche in Richtung des Anschlags wirkt und dadurch den Innenraum der einzelnen Reaktionszellen dichtend abschließt;
- Herstellung der Verbindungen der Fluidleitungen an die Versorgungsleitungen und Ableitungen, gegebenenfalls Herstellung der Verbindungen zu den elektrischen Versorgungsleitungen für die Elektroden;
- Betrieb der plattenförmigen Reaktionszellen unter den chemischen Prozessbedingungen.

Vorzugsweise werden bei der Durchführung des Verfahrens während des Betriebs der Reaktionszellen unter den chemischen Prozessbedingungen ein oder mehrere Prozessparameter pro Reaktionszelle registriert, wobei es bevorzugt ist, dass zumindest einer dieser Prozessparameter die Presskraft ist, mit die einzelnen Reaktionszellen zusammengedrückt werden.

Bei der Durchführung des Verfahrens ist es weiterhin bevorzugt, dass ein Abgleich von registrierten Prozessparametern pro Reaktionszelle mit Soll-Parametern durchgeführt wird; die Soll-Parameter können durch Referenzdaten gegeben sein oder durch Prozessparametern, die bei benachbarten Reaktionszellen registriert werden;
Austausch von einzelnen plattenförmigen Reaktionszellen durch selektives Lösen von Kolbenspannern und Versorgungsleitungen, wobei es bevorzugt ist, dass der Betrieb von denjenigen plattenförmigen Reaktionszellen, die nicht getauscht werden, fortgeführt wird.

Weiterhin ist es bei der Durchführung des Verfahrens bevorzugt, dass das Verfahren in Kombination mit einer Online-Analyse der Produktfluidströme durchgeführt wird, wobei es weiter bevorzugt ist, dass das Verfahren in Kombination mit einer Inline-Analyse von Innenräumen von einer oder mehrerer Reaktionszellen im Betrieb durchgeführt wird, insbesondere bevorzugt wird das Verfahren in Kombination mit einer Online-Analyse der Produktfluidströme und einer Inline-Analyse von Innenräumen der Reaktionszellen durchgeführt.

Bestandteile des Verfahrens kann auch die Durchführung einer Konditionierung der Reaktionszellen unter ausgewählten Prozessbedingungen sein. Weiterhing kann ein Bestandteil des Verfahrens die Durchführung von analytischen Charakterisierungsuntersuchungen sein. Die analytischen Charakterisierungsuntersuchungen können mittels online-Analyseeinheiten am Prozessfluid durchgeführt werden, das aus den plattenförmigen Reaktionszellen austritt. Die analytischen Charakterisierungsuntersuchungen können auch im Innenraum der plattenförmigen Reaktionszellen vorgenommen werden, sofern die Gehäuseplatten mit strahlungsdurchlässigen Fenstern ausgestattet sind und die entsprechenden Elemente zur Strahlungsanregung und Detektion enthalten sind_Davon abgesehen können diejenigen Funktionselemente des Innenraums der Reaktionszelle, die einem Verschleiß oder einer Abnutzung unterworfen sein können, nach der Entnahme aus der Reaktionszelle einer nachgeschalteten analytischen Charakterisierung zugeführt werden. Beispielsweise kann es von Interesse sein, die Katalysatorschicht einer nachgeschalteten Charakterisierung zuzuführen. Nachgeschaltete Analyse kann sich auf die Erfassung der Katalysatormorphologie beziehen. Eine sogenannte Obduktionsanalyse des verwendeten Katalysators nach der Durchführung des Verfahrens. Zur Durchführung der Obduktionsanalyse können sämtliche oberflächenanalytischen Verfahren eingesetzt werden, die dem Fachmann bekannt sind. Zu den Verfahren zur Analyse der Oberfläche gehören unter anderem auch: Lichtmikroskopie, Scanning Electron Microscopy, Transmission Electron Microscopy, EDX, XPS, ICP-OEX, GD-OES, IR, FTIR, SIMS, NMR, XRD, Chromatographie. Weiterhin kann die Oberfläche des verwendeten Katalysators auch mittels Laser-Scanner-Mikroskopie charakterisiert werden, wobei bei den Scans auch ein 3D-Verfahren mit Tiefenauflösung eingesetzt werden kann. Die Auflösung, die mittels der Laser-Scanner-Mikroskopie erzielt wird, liegt bei 2 - 3 µm.

Dabei ist es möglich, dass das Verfahren der Laser-Scanner-Mikroskopie mit den Elementen aus der nachfolgenden Gruppe kombiniert wird. Die Laser-Scanner-Mikroskopie kann mit einer Kamera kombiniert werden. Das gilt auch für alle anderen Verfahren der Oberflächenanalytik. So ist es möglich, durch Erfassung von Oberflächenstrukturen (Mustererkennung = Pattern Recognition) über die Kamera in Kombination mit einem entsprechenden Algorithmus die identischen räumlichen Orte oder Punkte wieder zu finden, von denen eine gewünschte Analyse vorgenommen wird. Dieses Vorgehen erlaubt das Sammeln von unterschiedlichen Informationen an ortsfesten Koordinaten. Diese Methode kann auch mit einem sehr exakten Koordinatensystem durchgeführt werden. Allerdings besteht dann das Problem, den Referenzpunkt auf der Probe so exakt festzulegen, dass die Wiederauffindbarkeit auch gegeben ist, wenn die Probe auf ein anderes Analysegerät beziehungsweise Instrument übergeben wird.

Bei dem Verfahren können folgende Geräte eingesetzt werden: eine CCD- Kamera, ein konvokaler, Confocal laser scanner (< 1µm), Laser focus variation, 3D interferometer (< 1 nm).

Das erfindungsgemäße Verfahren zur Untersuchung von chemischen Prozessen in plattenförmigen Reaktionszellen kann dadurch gekennzeichnet sein, dass die plattenförmigen Reaktionszellen in einem Temperaturbereich von 298,15 K bis 1273,15 K (25°C bis 1000°C) betrieben werden können.

**Bei der Durchführung** des Verfahrens können Temperaturänderungen in Zeiträumen vorgenommen, bei denen die Temperaturschritte im Bereich bis zu 60 K/Sekunde liegen. Der plattenförmige Aufbau der Reaktionszellen bietet den Vorteil, dass die Reaktionszellen eine große Außenfläche aufweisen im Verhältnis zu einem kleinen Volumen im Innenraum. Daher kann die Temperierung sehr schnell und mit hoher Genauigkeit vorgenommen werden.

Bei der Durchführung des Verfahrens kann ein Wechsel der Fluidzusammensetzung beziehungsweise ein Wechsel Gaszusammensetzung mit einer Geschwindigkeit von im Bereich von Sekunden beziehungsweise mit einer Frequenz im Bereich von 1 Hertz vorgenommen werden.

Die Erfindung betrifft auch eine Programmsteuerung zur Steuerung einer Apparatur, die entsprechend der Darstellung der Beschreibung oder der Ansprüche ausgeführt ist und die zur Durchführung eines Verfahrens zur Untersuchung von chemischen Prozessen eingesetzt wird, wobei die Programmsteuerung eine Datenbank umfasst, in der die Messwerte abgespeichert werden. Darüber hinaus bevorzugt kann die Durchführung des Verfahrens mit einer Programmsteuerung vorgenommen werden, wobei die Programmsteuerung eine Auswahl von Rezepten umfassen kann. Die Rezepte können bereit in der Programmsteuerung als Bibliothek vorhanden sein. Davon abgesehen kann der Benutzer jedoch auch eigene Rezepte erstellen.

Die Durchführung des Verfahrens kann unter Einbindung von Online-Detektionsmethoden erfolgen, mittel der die Zusammensetzung von Fluidströmungen charakterisiert wird. Als Methoden zur Online-Detektion können schnelle (Wiederholrate im Bereich von Sekunden, wobei die Messdauer im Bereich ≤ 30 Sekunden pro Messung beträgt, vorzugweise ≤ 10 Sekunden pro Messung) Analysemethoden wie FTIR oder auch HFID verwendet werden - oder bei stationären Untersuchungen (Wiederholrate im Bereich von Minuten, wobei die Messdauer im Bereich ≥ 0,5 Minuten pro Messung beträgt, vorzugweise die Messdauer im Bereich ≥ 1 Minute pro Messung beträgt) auch die Gaschromatographie.

Bei der Durchführung des Verfahrens können unterschiedliche Betriebsweisen simuliert werden, die beispielsweise die Betriebsweise von Fahrzeugen nachstellen. Beispielsweise können angelehnt sein an die Bedingungen des New European Driving Cycle (NEDC) für Verbrennungskraftfahrzeuge. Untersucht werden dann nicht die Schadstoffe, sondern die Effizienz der Energieverwertung.

Andere Beispiele richten sich auf die Konditionierung der Reaktionszellen zur Erreichung einer maximalen Leistungsausbeute. Hier gibt es von Herstellern von Brennstoffzellenstacks unterschiedliche Beschreibungen von Fahrweisen. Folgende Verfahren beziehungsweise Betriebszustände kommen hierbei auch zum Einsatz: Constant Current Hold, Voltage Cycling, Air Braking, Hydrogen Pump, Cathode oxidant Starvation, Thermal Cycles with Current Cycling, Combined Temperature and Humidity Cycling. Weitere Detailangaben zu Protokollen in Form von Literaturbeispielen sind beispielsweise in der nachfolgenden Veröffentlichung zu finden: Current Opinion in Electrochemistry 2022, 31:100843; sciencedirect.com; (https://doi.org/10.1016/j.coelec.2021.100843).

Zur Durchführung des Verfahrens ist es möglich einzelne Zyklen abzubilden, bei denen die Dauer des Gesamtzyklus im Bereich von 20 Sekunden bis 2000 Sekunden liegt, wobei die Temperaturschwankungen, die bei der Durchführung des Verfahrens auftreten, in einem Bereich von 273,15 K bis 673,15 K (0 bis 400 °C) liegen können.

Zur Durchführung des Verfahrens kann das Versorgungsmodul zur Zuführung von Gasen und Flüssigkeiten eingesetzt werden, die wahlweise oder gemeinsam bereitgestellt werden können.

Bei der Durchführung des Verfahrens zur beschleunigten Konditionierung kann die Cyclo-Voltametrie verwendet werden, die entweder zur Aktivierung von Elektroden oder Katalysatoren in Form von Konditionierung genutzt wird oder um Leistungseigenschaften mittels Cyclo-Voltametrie während der Durchführung des Verfahrens weiter zu verbessern. Mittels Cyclo-Voltammetrie (!) ist es dann auch möglich, die Ladungsdichte vor und nach der Konditionierung unter realen Betriebsbedingungen zu untersuchen und die Daten zur Ladungsdichte mit Leistungseigenschaften zu korrelieren. Anhand der Daten lassen sich dann gezielt diejenigen Struktur-Wirkungsbeziehungen identifizieren, die zu einer Verbesserung oder Verschlechterung der Leistungseigenschaften führen.

Bei der Durchführung des Verfahrens werden die Messparameter zumindest teilweise automatisch von der Programmsteuerung erfasst und registriert. Protokolle zu den Leistungseigenschaften.

Vorzugsweise wird ein Kolbenspanner von der Firma Enerpac Tool Group eingesetzt. Kolbenspanner dieses bevorzugten Typs werden in der WO-A 202162224 beschrieben. Die mittels Kolbenspanner aufgebrachte Druckpresskraft liegt im Bereich von 10 bis 1000 kN pro plattenförmiger Reaktionszelle, insbesondere im Bereich von 20 bis 500 kN pro plattenförmiger Reaktionszelle. Für den Fall von polymeren Dichtungsmaterialien ist es bevorzugt, dass die spezifische Presskraft, die auf die Oberflächen der plattenförmigen Reaktionszellen wirkt, größer als 1 kN pro cm², weiter vorzugsweise ist die auf die Kontaktfläche wirkende Presskraft größer als 2 kN pro cm². Die Presskraft hängt von dem jeweils gewählten Material des Dichtungselements ab. Bei metallischen Dichtungsmaterialien ist die Presskraft auch im Bereich von 10 kN pro cm² oder größer.

Die chemischen Prozesse, die in den plattenförmigen Reaktionszellen durchgeführt werden, werden bei Temperaturen im Bereich von 273,15 bis 1273,15 K durchgeführt, insbesondere in einem Bereich von 298,15 bis 1073,15 K, weiter insbesondere bei einer Temperatur im Bereich von 373,15 bis 873,15 K.

Bei der Durchführung des Verfahrens liegen die Drücke im Bereich von 0,05 bis 500 bara, insbesondere im Bereich von 0,1 bis 300 bara, weitere insbesondere im Bereich von 1 bis 250 bara.

Bei einer plattenförmigen Reaktionszelle handelt es ich um eine Reaktionszelle, die als einzelne Reaktionszelle vorliegt oder in Form von gestapelten plattenförmigen Reaktionszellen vorliegt, wobei die einzelne oder der die gestapelten Reaktionszellen in einer Position der Aufnahmeeinheit angeordnet werden können. Falls es sich bei den plattenförmigen Reaktionszellen um gestapelte Anordnungen handelt, so umfasst ein einzelner Stapel 2 bis 10 plattenförmige Reaktionszellen, insbesondere umfasst ein einzelner Stapel 2 bis 6 platten-förmige Reaktionszellen, weiter insbesondere 2 bis 4 plattenförmige Reaktionszellen.

Die plattenförmigen Reaktionszellen werden in einer Ausführung verwendet, die aus der Gruppe Membranreaktor, elektrochemischer Reaktor in Form von Brennstoffzellenreaktor, elektrochemischer Reaktor in Form eines Elektrolysators, photokatalytischer Reaktor, insbesondere bevorzugt als photokatalytischer Reaktor mit integrierter LED-Quelle ausgewählt ist.

Die Dicke eines einzelnen plattenförmigen Reaktionszellen liegt in einem Bereich von 0,5 bis 5 cm, insbesondere von 0,8 bis 4 cm, weiter insbesondere im Bereich von 1,5 bis 2,5 cm.

Die plattenförmigen Reaktionszellen beziehungsweise einzelne Funktionselemente der plattenförmigen Reaktionszellen können Identifizierer aufweisen, die beispielsweise in der Form eines Tags, eines Barcodes oder eines RFID Chips gegeben sind. Dadurch kann sichergestellt werden, dass sich die plattenförmige Reaktionszellen an festgelegten Aufnahmepositionen des Anschlags befinden. Dadurch kann auch der kontrollierte Zusammenbau der plattenförmigen Reaktionszellen überwacht werden. In einer bevorzugten Ausführungsform erfolgt der Zusammenbau zumindest teilweise durch einen Roboter.

Die Dichtungselemente, die zum Abdichten der plattenförmigen Reaktionszellen, eingesetzt werden, wird anhand der Prozessparameter ausgewählt, bei denen die plattenförmige Reaktionszellen betrieben werden. Bei Temperaturen, die 573,15 K übersteigen, werden Dichtungen bevorzugt, die ein Material umfassen aus der Gruppe Metall, Graphit. Bei Temperaturen bis 573,15 K werden Dichtungen eingesetzt, die ein Material umfassen aus der Gruppe Teflon, Kalrez, Viton, Gummi.

Falls mehrstufige Prozesse durchgeführt werden, so ist es bevorzugt, dass diese mehrstufigen Prozesse in gestapelten plattenförmigen Reaktionszellen durchgeführt werden, so dass die Verfahrensstufen in den unterschiedlichen Stufen einer Schicht durchgeführt werden. Diese Anordnung hat den Vorteil, dass die benachbarten plattenförmigen Reaktionszellen, die nicht in der gleichen Aufnahmeposition angeordnet sind, nicht miteinander gekoppelt sind. Dadurch können einzelne plattenförmigen Reaktionszellen im laufenden Betrieb getauscht werden, während andere plattenförmigen Reaktionszellen weiter betrieben werden.

Bevorzugten Ausführungsform bildet die erfindungsgemäße Apparatur ein zentrales Modul einer Multifunktionsvorrichtung, die aus mehreren Modulen aufgebaut ist und die eine große Flexibilität zulässt, was die Durchführung von ganz unterschiedlichen chemischen Prozessen betrifft und was das Hinzufügen und Austauschen von einzelnen Funktionsmodulen betrifft. Somit betrifft die Erfindung auch eine Multifunktionsvorrichtung, die nachfolgend genannte Module umfasst: ein oder mehrere Versorgungsmodule, ein zentrales Reaktionsmodul einer erfindungsgemäßen Apparatur zur Aufnahme von plattenförmigen Reaktionszellen, ein Analysemodul, ein Steuermodul mit Prozesskontrolle und Datenerfassungseinheit.

Diese und andere Merkmale werden anhand der folgenden Figurenbeschreibung erläutert.

### Kurze Beschreibung der Figuren

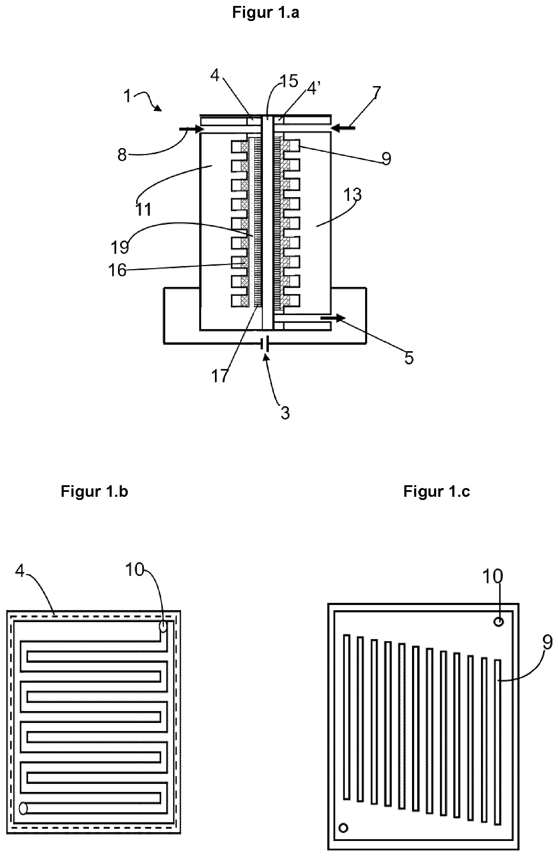

- Figur 1.a: zeigt den schematischen Aufbau einer plattenförmigen Reaktionszelle im Querschnitt, die als Elektrolyseplattenreaktor beziehungsweise als plattenförmige Elektrolysezelle ausgelegt ist, die zwei Halbzellen umfasst, die durch eine Membran getrennt werden;
- Figur 1.b: zeigt den schematischen Aufbau einer plattenförmigen Reaktionszelle als Aufsicht auf die Innenfläche einer Gehäuseplatte, in der eine Kanalstruktur zur Durchleitung von Fluid vorgesehen ist;
- Figur 1.c: zeigt den schematischen Aufbau einer plattenförmigen Reaktionszelle als Aufsicht auf die Innenfläche einer Gehäuseplatte, die keinen - wie in der Figur 1.b dargestellten - durchgehenden Einzelkanal aufweist, sondern eine Verteilung auf mehrere parallele Kanäle;
- Figur 2: zeigt den schematischen Aufbau einer Kolbenspanneinheit, in der eine Kolbenspanner als Einschraubkolbenspanner angeordnet ist, wobei das Kolbenspanneinheit eine Leitung zur Fluidversorgung aufweist;
- Figur 3.a: zeigt eine schematische Darstellung der erfindungsgemäßen Apparatur, die mit vier plattenförmigen Reaktionszellen bestückt ist, wobei die plattenförmigen Reaktionszellen jeweils zwischen Aufnahmeeinheiten und Kolben der Kolbenspanneinheiten fixiert sind, wobei die Kolbenspanneinheiten als ein gemeinsames Element ausgestaltet sind;

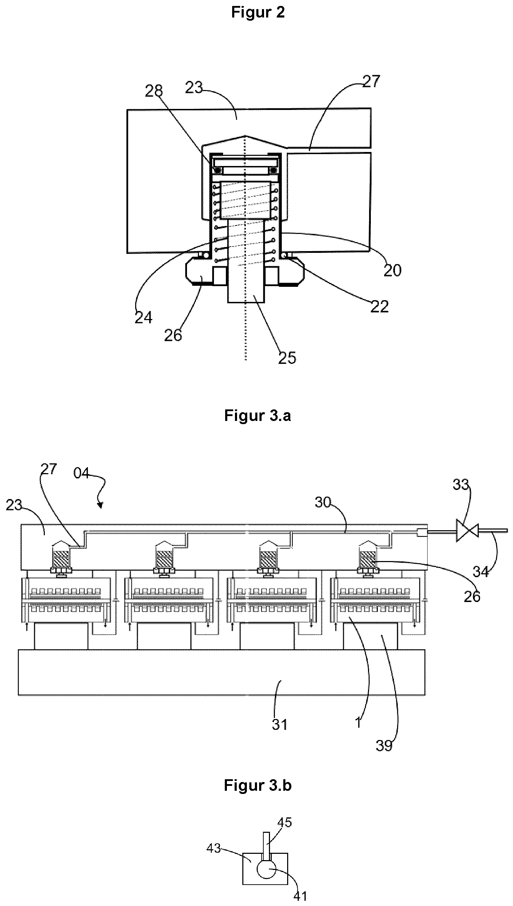

- Figur 3.b: zeigt eine schematische Darstellung eines Kraftverteilerelements, welches als Kugelelement ausgestaltet ist und welches an der Spitze eines Kolbens fixiert wird;

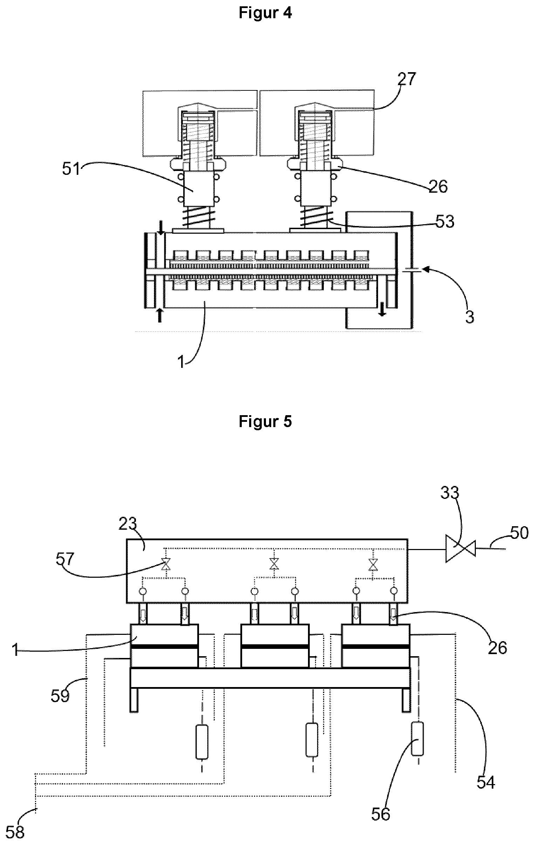

- Figur 4: zeigt eine schematische Darstellung einer plattenförmigen Reaktorzelle, die mit zwei Kolbenspannelementen in Kontakt steht, die eine Kolbenspanneinheit bilden, wobei die Kolben zylinderförmige Stangen aufweisen, durch die der Abstand verlängert wird;
- Figur 5: zeigt eine schematische Darstellung einer erfindungsgemäßen Apparatur, die mit drei plattenförmigen Reaktorzellen ausgestattet ist, wobei die drei Kolbenspanneinheiten in einem gemeinsamen Element angeordnet sind, in dem die Fluidversorgungsleitungen zum Antrieb der einzelnen Kolbenspanner verlaufen, wobei die Leitung mit Ventilen ausgestattet sind und die Hauptleitung ein gemeinsames Druckregelventil aufweist. Die einzelnen Reaktionszellen sind mit Zuleitungen und Ableitungen versehen, wobei die Ableitungen zu Flüssigkeitssammelgefäßen führen;

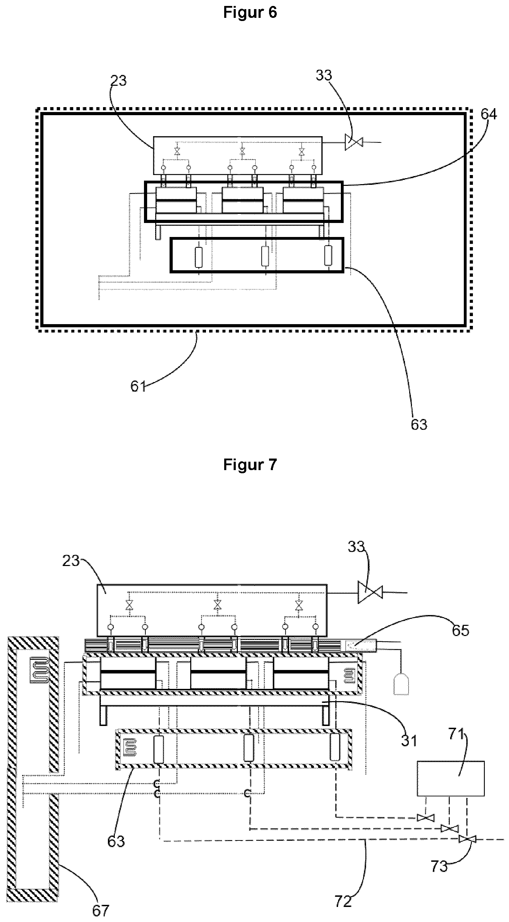

- Figur 6: zeigt eine schematische Darstellung der Apparatur, die in Figur 5 gezeigt wird, wobei die Apparatur in eine Ofenkammer angeordnet ist und die einzelnen Baugruppen, und zwar die Kolbenspanneinheiten in einem gemeinsamen Element, die plattenförmigen Reaktionszellen und die Flüssigkeitsabscheider mit separaten Temperierungselementen versehen sind;
- Figur 7: zeigt eine schematische Darstellung der Apparatur, die in Figur 6 gegeben ist, wobei die Kolben der Kolbenspanneinheiten mit einer Temperierungsvorrichtung ausgestattet ist und wobei Fluide über eine gemeinsame Fluidzuführung zugeführt werden, die auch eine Temperierungsvorrichtung aufweist. Die aus den Flüssigkeitsabscheidern ausgeführten Ströme können einer Analyseneinheit zugeführt werden;
- Figur 8.a: zeigt eine schematische Darstellung der Apparatur, die mit plattenförmigen Reaktionszellen ausgestattet ist, wobei die plattenförmigen Reaktionszellen als einzelne Reaktionszelle und als Stapel an Reaktionszellen vorliegen. Insgesamt können in der dargestellten Apparatur drei unterschiedliche Gruppen mit plattenförmigen Reaktionszellen aufgenommen werden;
- Figur 8.b: zeigt eine schematische Darstellung, wobei die Kolbenspanneinheiten und die Aufnahmeeinheiten als separate Elemente vorliegen, wobei für jedes Paar aus Kolbenspanneinheit und Aufnahmeeinheit jeweils ein Haltrahmen vorliegt;
- Figur 8.c: zeigt eine schematische Darstellung von Kolbenspanneinheiten, die durch Fluidleitungen an einen Fluidversorgungstank angeschlossen sind, der mit einem Druckregler versehen ist;
- Figur 8.d: zeigt eine schematische Darstellung der Kolbenspanneinheiten mit Fluidversorgungstank, der in Figur 8.c gezeigt ist, wobei die Kolbenspanneinheiten mit Halterahmen und Aufnahmeeinheiten verbunden sind und zwischen dem Kolben und den Aufnahmeeinheiten plattenförmige Reaktionszellen angeordnet sind;

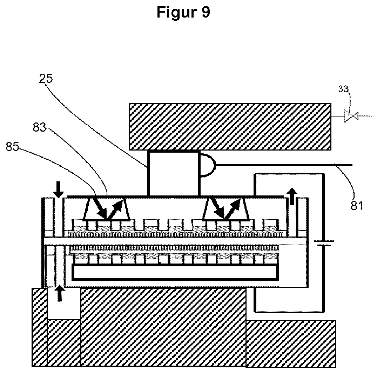

- Figur 9: zeigt schematische Darstellung einer plattenförmigen Reaktionszelle, die in einer Anpresseinheit fixiert wird, wobei der Kolben 25 gegen die äußere Oberfläche der Reaktionszelle gepresst wird und wobei der Kolben gleichzeitig mit einem Sensorelement 81 verbunden ist, welche die Kolbenbewegungen detektiert; die Reaktionszelle weist strahlungstransparente Fenster 83 auf, durch die Strahlung 85 in den Innenraum der Zelle geleitet wird;
- Figur 10.a: zeigt schematische Darstellung von vier Reaktionszellen, die in einer parallelen Anordnung vorliegen;
- Figur 10.b: zeigt schematische Darstellung von vier Reaktionszellen, die in einer seriellen Anordnung vorliegen;
- Figur 11: zeigt schematische Darstellung zwei Stapeln mit jeweils drei plattenförmigen Reaktionszellen, die im Stapel, der auf der linken Seite angeordnet ist, eine serielle Verknüpfung 93 und im Stapel, der auf der rechten Seite angeordnete ist, eine parallele Anordnung 91 aufweisen.

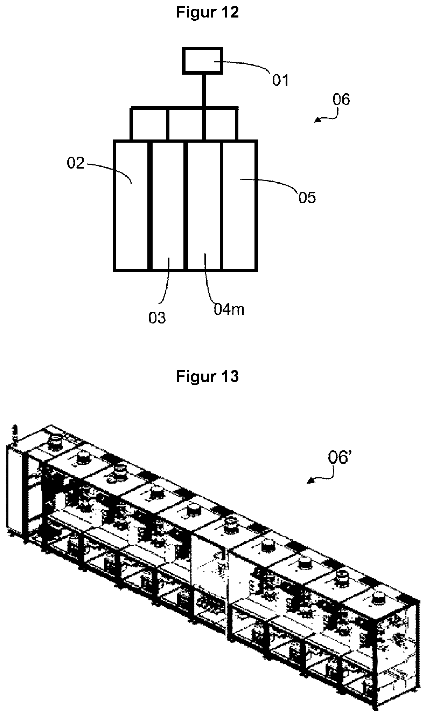

- Figur 12: zeigt schematische Darstellung einer Vorrichtung, die aus einer Gruppe von vier Modulen aufgebaut ist, wobei die Module mit einer zentralen Steuereinheit verbunden sind;
- Figur 13: zeigt eine schematische Darstellung einer Ausführungsform einer Vorrichtung, die sich aus mehreren Modulen zusammensetzt, die die erfindungsgemäße Apparatur als Modul umfassen, welches in einer Pluralität von Modulen vorlegt, die kombiniert sind;

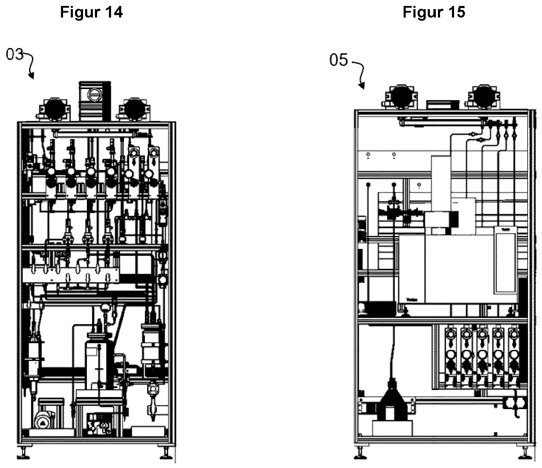

- Figur 14: zeigt schematische Darstellung eines Moduls zur Versorgung mit Gasen und Flüssigkeiten;
- Figur 15: zeigt schematische Darstellung eines Moduls mit Online-Analyse-Einheiten;

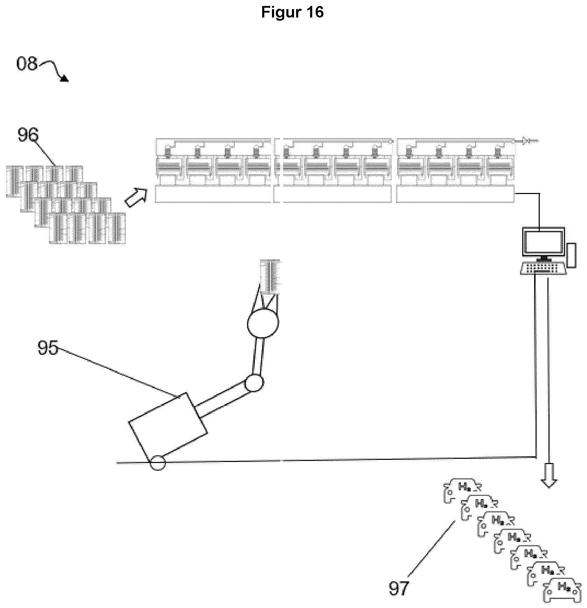

- Figur 16: zeigt schematische Darstellung einer erfindungsgemäßen Apparatur zur Durchführung von chemischen Prozessen in plattenförmigen Reaktionszellen in einem Arbeitsprozess zur Testung von Produktionsteilen, die Funktionselemente in Serienprodukten darstellen.

Weitere Merkmale und Vorteile der erfindungsgemäßen Verfahren und der Vorrichtung ergeben sich aus den Figuren und aus der zugehörigen Figurenbeschreibung. Es versteht sich, dass die vorstehend genannten und die nachstehend noch zu erläuternden Merkmale nicht nur in der jeweils angegebenen Kombination, sondern auch in anderen Kombinationen oder in Alleinstellung anwendbar sind, ohne den Rahmen der vorliegenden Erfindung zu verlassen. Ausführungsbeispiele der Erfindung sind in den Figuren dargestellt und werden nachfolgend im Detail beschrieben.

### Detaillierte Beschreibung beispielhafter Ausführungsformen

Zunächst wird anhand der Gesamtheit der Figuren eine allgemeine Beschreibung der Erfindung vorgenommen und anschießend die Erfindungsdetails mit einer konkreten Bezugnahme auf die Figuren beschrieben.

Beispiel der Herstellung von Katalysatorschichten.

Ein Beispiel für den Einsatz der erfindungsgemäßen Apparatur in Verbindung mit der Entwicklung von neuen und verbesserten Katalysatorschichten, die mittels der Apparatur in kurzer Zeit gescreent werden können. Zur Herstellung der Katalysatorschichten können sämtliche Verfahren eingesetzt werden, die auf dem Gebiet der Katalysatorsynthese bekannt sind. Es handelt sich um Verfahren zur Aufbringung von Katalysatoren auf Basisplatten oder auch auf Elektroden oder auf Basisplatten, die die Elektroden enthalten. Das Herstellungsverfahren kann zumindest ein Verfahren umfassen, das ausgewählt ist aus der Gruppe: Chemisches Tauchbad, Spin-Coating, Dip-Coating, Rakeln, Klinge zum Überstreichen, Spritzguß, Sprühbeschichtung, Siebdruck, Inkjet-Druck, Aerosol-Jet-Verdüsung, Stab-Auftrag, 3D-Druckverfahren, Plasmabeschichtung.

Beim Herstellungsverfahren können spezielle plattenförmige Scheiben eingesetzt werden, die ausgewählt sind aus der Gruppe poröse Keramikschicht, poröse Metallschicht, Kompositmaterial aus Keramik und Metall. Bei den keramischen Materialien kann es sich um Alumina, Steatit handeln.

In einer bevorzugten Ausführungsform weist die erfindungsgemäße Apparatur einen Aufbau auf, der den Darstellungen entspricht, die in der Figur 5 und der Figur 8 gezeigt werden. In der Darstellung, die in Figur 5 gezeigt wird, wird die äußere Plattenfläche jeweils mit zwei Kolbenspannern (26) in Richtung Anschlag verpresst, wohingegen in Figur 8 die äußere Plattenfläche nur mit einem Kolbenspanner (26) gegen den Anschlag verpresst wird. In beiden Ausführungsformen ist ein Verteilerelement (23) zu erkennen, in dem eine gemeinsame Fluidleitung (30) mit Fluidleitungen (27) zu den einzelnen Kolbenspannern (26) vorhanden sind. In den Fluidleitungen (27) sind jeweils Schaltventile (57) angeordnet, wobei durch das Betätigen der Schaltventile (57) die Verbindung der Fluidleitung zur Fluidversorgung (50) unterbrochen wird. Somit können mittels des Druckregelventils (33) und dem mit dem Druckregelventil verbundenen Druckregel in Abhängigkeit des Ventilzustands des Schaltventils entweder die Druckwerte als integrale Druckwerte oder als auf eine ausgewählte Reaktionszelle bezogenen Druckwert bestimmt werden. Für den Fall, dass die Schaltventile (57) in den einzelnen Leitungen bis auf ein einzelnes Schaltventil geschlossen sind, so bezieht sich der Druckwert am Druckregler auf diejenige Kolbenspanneinheit, bei dem das Schaltventil geöffnet ist. Somit ist ein selektives Abfragen, Abtasten oder Multiplexen von einzelnen Messerwerten möglich.

Die erfindungsgemäße Apparatur bietet eine sehr hohe Flexibilität in Bezug auf die zu untersuchenden chemischen Prozesse. Mittels der Apparatur ist eine gezielte Untersuchung von einer Vielzahl von Prozessparametern möglich, die in der zentralen Datenbank in Form von relationalen Prozessdaten gesammelt werden. Die in der Datenbank registrierten Daten liefern Prozessinformationen, die für die für die Versuchsplanung von zukünftigen experimentellen Konfigurationen verwendet werden können. Die Programmsteuerung oder Datenbankauswertung kann mit einem Programm versehen sein, das eigenständig in der Lage ist, anhand der Analyse von Datensätzen diejenigen Prozessbedingungen auszuwählen, die besonders günstig sind. Die große Flexibilität in Kombination mit der Erfassung von großen Datenmengen ermöglicht eine Beschleunigung der Durchführung von chemischen Prozessen. Gleichzeitig kann die Datenqualität bei den generierten Prozessdaten auch verbessert werden, da es aufgrund einer parallelen Anordnung von plattenförmigen Reaktionszellen auch möglich ist, die chemischen Prozesse in Gegenwart von Referenzzellen durchzuführen, welche mit Referenzmaterialien bestückt sind und welche unter ausgewählten Referenzbedingungen durchgeführt werden.

Ein Aspekt der erfindungsgemäßen Apparatur und der erfindungsgemäßen Vorrichtung bezieht sich somit auf die Generierung von chemischen Prozessdaten, die eine hohe und verbesserte Datenqualität gegenüber herkömmlichen Vorrichtungen aufweisen, die ohne parallele Anordnungen aufgebaut sind. Die hohe Datenqualität hat den Vorteil, dass die Entwicklung von chemischen Prozessen beschleunigt werden kann, da der Umfang von Untersuchungen einer AufSkalierung eingespart werden können. Dadurch lassen sich Ressourcen schonen. Gleichzeitig ist es möglich, diejenigen chemischen Prozesse zu entwickeln, die zu Lösungen in kleineren Bereichen zum Einsatz gebracht werden können.

Ein weiterer Aspekt der Erfindung betrifft die Verwendung der erfindungsgemäßen Apparatur zur Untersuchung von chemischen Prozessen in plattenförmigen Reaktionszellen in einer Anordnung zur Unterstützung von seriellen Produktionsprozessen im Bereich Energie- und Automobilsektor. Insbesondere geeignet ist der Einsatz der Erfindung im Bereich von Qualitätskontrolle in der Serienproduktion und auch bei der Durchführung und Testung von Konditionierungen. Die schematische Darstellung in Figur 16 zeigt die Kombination der erfindungsgemäßen Apparatur mit einem Roboter, so dass die Bedienung der Apparatur zumindest teilweise automatisch vorgenommen werden kann, weiter vorzugsweise wird die Bedienung der Apparatur vollautomatisch durchgeführt. Der Einsatz auf dem Gebiet der Qualitätskontrolle und bei der Konditionierung ist besonders vorteilhaft, da die Spannkolbeneinheiten individuell ansteuerbar sind, die Reaktionszellen einfach ausgetauscht werden können und ein hoher Durchsatz möglich ist, so dass mit Hilfe der erfindungsgemäßen Apparatur entsprechend der Produktionskapazitäten von einzelnen Fabriken Produktionstests (Qualitätskontrolle oder Konditionierung oder die Kombination aus Qualitätskontrolle und Konditionierung) durchgeführt werden können, wobei die Testkapazitäten im Bereich 10 - 1500 Reaktionszellen pro Tag liegen, vorzugsweise im Bereich von 50 bis 1000. Die Vorteile der Erfindung stellen hier synergetisch Effekte bereit, die auch durch folgende Eigenschaften gegeben ist: die Testprotokolle können so gewählt werden, dass eine beschleunigte Geschwindigkeit bei der Alterung der Funktionsmaterialien und somit bei der Testung erreicht werden kann, die Durchführung der Tests mit Sensorelementen überwacht und die registrierten Testdaten werden in einer Datenbank abgespeichert, die Fixierung der Reaktionszellen in der Apparatur mittels der Kolbenspannelemente ist zeitsparend und kann auch automatisiert werden.

In einer bevorzugten Ausführungsform sind die Ausgangsleitungen der plattenförmigen Reaktionszellen mit einem Druckregelsystem ausgestattet, wobei das Druckregelsystem ausgewählt ist aus der Gruppe Druckregelventil, das direkt in der Ausgangsleitung angeordnet ist, oder Seitenstromdruckregelvorrichtung, die durch die Einspeisung von Verdünnungsgasen über Kapillarleitungen in Verbindung mit Druckregler vorgenommen wird. In einer weiter bevorzugten Ausführungsform ist die Druckregelung durch Seitenstromleitung mit einem justierbarem Ventil ausgestattet, das eine Feinregulierung des Gasstroms erlaubt, vorzugsweise handelt es sich um ein Reco-Regelventil.

In Bezug auf die Figur 1.b und Figur 1.c ist zur Ausgestaltung der Kanäle 9 festzustellen, dass die Dimensionierung der Kanäle davon abhängt, welche Dimensionierung die plattenförmige Reaktionszelle aufweist. In einer Ausführungsform können die Kanäle 9 die Dimensionen von parallelen Kanälen aufweisen, wobei die Länge eines Fluidkanals im Bereich von 10 bis 50 mm und der Durchmesser eines Fluidkanals im Bereich von 50 bis 2000 µm liegen, weiter vorzugsweise im Bereich von 100 bis 1000 µm, darüber hinaus bevorzugt in einem Bereich von 100 bis 500 µm.

Die Auswahl des Materials für die Dichtungen hängt von den Prozessparametern wie Art und Konzentration des Mediums, Temperatur, Druck ab. Die Dicke und Form der Dichtungen hängen von den eingesetzten Bauteilen ab. Die Dicke der Dichtungen kann im Bereich von 1 - 2 mm liegen, wobei die Dichtungen auch eine Dicke von 3 mm aufweisen können; auch Dichtungen mit Dicken von < 1 mm können eingesetzt werden. Die Dicke der eingesetzten Dichtungselemente 4, 4' in der Figur 1.a hängt von der Fläche der Güte der Oberflächen der Flanschen ab, gegen die die Dichtungen verpresst werden. Bei den Flanschen handelt es sich beispielsweise um die Randbereiche auf der Innenseite der Innenbereiche der Gehäuse der Reaktionszellen, die beispielsweise gegen eine anderes Gehäuseteil oder ein Funktionselement verpresst werden. Schematisch ist dies für den Verlauf der Dichtung 4 in der Figur 1.b dargestellt. Funktionselemente wie die Membran 15 in der Figur 1.a können von einer Rahmenstruktur umgeben sein, wobei die Rahmenstruktur einen Rand bildet, der zwischen den Gehäusehälften angeordnet wird, wobei die Rahmenstruktur zwischen den Gehäusehälften des Plattenreaktors angeordnet wird.

### Bezugszeichenliste

- 01: Steuervorrichtung
- 02: Schaltschrank, elektrische Versorgung für Regler
- 03: Versorgungsmodul, Gase und Flüssigkeiten
- 04: Apparatur mit plattenförmigen Reaktionszellen in Anpressvorrichtung
- 04m: Modul, das eine Apparatur 04 umfasst
- 05: Analysemodul
- 06: Vorrichtung, die aus einer Gruppe von vier Modulen 02, 03, 04m und 05 sowie Steuervorrichtung 01 aufgebaut ist
- 06': Vorrichtung aus Gruppe von Modulen mit Mehrfach-Modulen 04m und weiteren Modulen
- 08: System zur Durchführung von Qualitätskontrolle an Reaktionszellen oder Funktionselementen, die eine Vorrichtung 06 bzw. 06' umfasst
- 1: plattenförmige Reaktionszelle
- 3: elektrische Versorgungseinheit
- 4, 4': Dichtungselemente
- 5: Ableitung
- 7: Zuleitung
- 8: Zuleitung
- 9: Kanal in Gehäuseelement
- 10: Zuleitung, Ableitung
- 11: Gehäuseelement
- 13: Gehäuseelement
- 15: Trennwand, Membran
- 16: Diffusionsschicht
- 17: poröse Kalalysatorschicht
- 19: Elektrode
- 20: Gewinde
- 22: Dichtungselement
- 23: Kolbenspanneinheit
- 24: Feder
- 25: Kolben des Kolbenspanners
- 26: Kolbenspanner
- 27: Fluidleitung
- 28: Dichtung
- 30: gemeinsame Fluidleitung
- 31: Verbindungselement für Aufnahmeeinheiten beziehungsweis Aufnahmeeinheiten
- 33: Ventil, Druckregelventil
- 34: Versorgungsleitung
- 35: Fluidversorgungstank
- 39: Aufnahmeeinheit(en) für plattenförmige Reaktionszelle(n)
- 41: Kugelelement
- 43: Aufnahme für Kugelelement
- 45: Verbindungsstück zum Kolben
- 50: Versorgungsleitung
- 51: Abstandhalter in Form von zylinderförmigem Stab
- 53: Federelement am Kolben
- 54: Ausgangsleitung
- 56: Flüssigkeitsabscheider
- 57: Schaltventil
- 58: gemeinsame Versorgungsleitung für Zulauf
- 59: Verbindungsleitung zur Zuleitung eine Reaktionszelle
- 60: Einhausung zur Temperierung
- 63: Temperierungsvorrichtung für Abscheider
- 64: Temperierungsvorrichtung für plattenförmige Reaktionszellen
- 65: Kühlvorrichtung zur Temperierung der Kolbenspanner
- 67: Temperierungsvorrichtung für Versorgungseinheit
- 71: Analyseeinheit
- 72: Flüssigkeitsablassleitung vom Abscheider
- 73: Schaltventil mit Verbindung zur Analyseeinheit
- 78: Halterahmen
- 81: Sensor zur Überwachung des Kolbens
- 83: Strahlungstransparentes Fenster im Gehäuse einer Reaktionszelle
- 85: Strahlungsdurchtritt durch Transparentes Fenster im Gehäuse
- 91: parallele Anordnung von mehreren Reaktionszellen
- 93: serielle Anordnung von mehreren Reaktionszellen
- 95: Roboter
- 96: Funktionselemente in Testzellen
- 97: Reaktionszellen in Serienprodukten

## Patentansprüche

1. Apparatur zur Untersuchung von chemischen Prozessen in plattenförmigen Reaktionszellen, aufweisend:
eine Gruppe von plattenförmigen Reaktionszellen oder eine Gruppe von Stapeln mit plattenförmigen Reaktionszellen beziehungsweise, die auch einzelne plattenförmige Reaktionszellen umfassen, sowie ein Verschlusssystem, das eine unabhängige Fixierung der einzelnen plattenförmigen Reaktionszellen und gestapelten plattenförmigen Reaktionszellen ermöglicht,
wobei das Verschlusssystem Aufnahmeeinheiten und eine Vielzahl von Kolbenspanneinheiten umfasst, wobei die Kolbenspanneinheiten ein gemeinsames Antriebssystem aufweisen,
jede plattenförmige Reaktionszelle oder jeder Stapel mit plattenförmigen Reaktionszelle weist zwei äußere Plattenflächen auf, wobei jeweils die eine äußere Plattenfläche mit einer Aufnahmeeinheit und die andere äußere Plattenfläche mit je einem oder mehreren Kolbenspannern der Kolbenspanneinheit in Kontakt steht, wobei die Kolbenspanneinheit dazu ausgelegt ist, die plattenförmigen Reaktionszellen oder gestapelten plattenförmigen Reaktionszellen voneinander unabhängig mit einer Presskraft zu beaufschlagen, wobei die Presskraft senkrecht zur Plattenfläche in Richtung der Aufnahmeeinheit wirkt,
wobei die plattenförmigen Reaktionszellen oder gestapelten plattenförmigen Reaktionszellen jeweils eine Mehrzahl von plattenförmigen Funktionselementen umfassen, wobei es sich bei den plattenförmigen Funktionselementen um Katalysatorschichten, Gasdiffusionsschichten, bipolare Platten, Protonenaustauschmembranen handelt, wobei jede plattenförmigen Reaktionszelle je wenigstens eine Zuleitung für ein Edukt und je wenigstens einer Ableitung für ein Produkt aufweist oder wobei die gestapelten plattenförmigen Reaktionszelle je wenigstens eine Zuleitung für ein Edukt und je wenigstens einer Ableitung für ein Produkt aufweisen.

2. Apparatur zur Untersuchung von chemischen Prozessen nach Anspruch 1, wobei die plattenförmigen Reaktionszellen oder gestapelten plattenförmigen Reaktionszellen jeweils eine Mehrzahl von plattenförmigen Funktionselementen umfassen, welche ausgewählt sind aus der Gruppe Katalysatorschichten, Gasdiffusionsschichten, bipolare Platten, Protonenaustauschmembranen, Anionenaustauschmembranen, Separationsmembranen.

3. Apparatur zur Untersuchung von chemischen Prozessen nach Anspruch 1 oder Anspruch 2, wobei die Kolbenspanneinheiten ein fluidisches Antriebssystem aufweisen, wobei die Kolbenspanneinheiten durch Leitungen mit einer gemeinsamen Fluidversorgungsleitung oder mit einem gemeinsamen Fluidversorgungstank verbunden sind, wobei die gemeinsame Fluidversorgungsleitung oder der Fluidversorgungstank mit einem Druckregelventil verbunden ist, vorzugsweise handelt es sich bei dem Druckregelventil um ein Equilibar-Ventil, darüber hinaus bevorzugt handelt es sich bei dem Fluid um ein Pneumatik- oder Hydraulikfluid, , wobei in den Leitungen zur gemeinsamen Fluidversorgungsleitung oder dem gemeinsamen Fluidversorgungstank Schaltventile angeordnet sind, wobei mittels Betätigung der Schaltventile der Fluidstrom durch die Fluidleitung zu- oder abgeschaltet werden kann.

4. Apparatur zur Untersuchung von chemischen Prozessen nach einem der Ansprüche 1 bis 3, wobei die Kolbenspanneinheit der Anpressvorrichtung **dadurch gekennzeichnet ist, dass** diese einen Kolbenspanner pro plattenförmiger Reaktionszelle beziehungsweise einen Kolbenspanner pro gestapelten plattenförmigen Reaktionszellen aufweist, weiter vorzugsweise ist an der Spitze von jedem Kolben der Kolbenspanner ein Kraftverteilerelement angeordnet, darüber hinaus bevorzugt weist jedes Kraftverteilerelement ein Kugellager auf.

5. Apparatur zur Untersuchung von chemischen Prozessen nach einem der Ansprüche 1 bis 4, wobei die plattenförmigen Reaktionszellen Trennmembranen und Elektroden aufweisen und in Halbzellen unterteilt werden, wobei die Elektroden an elektrische Versorgungsleitungen angeschlossen sind, wobei die plattenförmigen Reaktionszellen als Elektrolysezellen oder galvanische Zellen ausgestaltet sind, insbesondere bevorzugt sind die die plattenförmigen Reaktionszellen als Elektrolysezellen ausgestaltet, wobei es bevorzugt ist, dass die Elektroden an Strom- und Spannungsmessgeräte angeschlossen sind, weiter vorzugsweise umfassen die Apparatur online-Analysegeräte aus der Gruppe online-Voltammetrie zur Messung von V/A-Funktionen, die Impedanzspektroskopie zur Messung hochfrequenter Spannungswechsel.

6. Apparatur zur Untersuchung von chemischen Prozessen nach einem der Ansprüche 1 bis 5, wobei der Kolben oder das Kraftverteilerelement mit einem Sensor ausgestattet sind, der eine geometrische Veränderung der Reaktionszelle während der Reaktion messen kann, Sensoren sind Kraftmesssensoren oder Messsensoren, die ausgewählt sind aus der Gruppe Dehnungsmessstreifen, Abstandsdetektoren wie Ultraschall-, optische Lichtschranken oder Interferenzmess-Analysator.

7. Apparatur zur Untersuchung von chemischen Prozessen nach einem der Ansprüche 1 bis 6, wobei eine oder mehrere der plattenförmigen Reaktionszellen einen oder mehrere Sensoren aufweisen, die mit Stellen im Innenraum der Reaktionszellen verbunden sind, wobei es sich bei den Sensoren um Sensoren für die Durchführung von in-situ-Messmethoden handelt, welche ausgewählt sind aus der Gruppe elektrochemische Dilatometrie zur Charakterisierung der Dickenänderung von Elektroden, lichtmikroskopische oder spektroskopische Charakterisierung über Glasfasern zu Elektroden oder Membranen.

8. Apparatur zur Untersuchung von chemischen Prozessen nach einem der Ansprüche 1 bis 7, wobei die Aufnahmeeinheiten als körperlich separate Einheiten oder als eine körperliche verbundene Einheit vorliegen; im Fall, dass die Aufnahmeeinheiten als körperlich separate Einheiten vorliegen, weist jede Aufnahmeeinheit einen eigenen Halterahmen auf, der mit je einer Kolbenspanneinheit verbunden ist; im Fall, dass die Aufnahmeeinheiten als eine körperlich verbundene Einheit vorliegen, weisen die Aufnahmeelemente einen gemeinsamen Halterahmen auf, wobei es bevorzugt ist, dass die Kolbenspanneinheiten in einem gemeinsamen Element angeordnet sind, wobei der der gemeinsame Haltrahmen die Aufnahmeeinheiten und das gemeinsame Element verbindet.

9. Apparatur zur Untersuchung von chemischen Prozessen nach einem der Ansprüche 1 bis 8, wobei die Vorrichtung **dadurch gekennzeichnet ist, dass** die plattenförmigen Reaktionszellen eine innere Plattenfläche aufweisen, die im Bereich von 1,5 x 1,5 cm² bis 30 x 30 cm² liegt, vorzugweise liegt die innere Plattenfläche 2,0 x 2,0 cm² bis 25 x 25 cm², darüber hinaus bevorzugt liegt die innere Plattenfläche 3,0 x 3,0 cm² bis 15 x 15 cm².

10. Apparatur zur Untersuchung von chemischen Prozessen nach einem der Ansprüche 1 bis 9, wobei die Kolben der Kolbenspanner mit Distanzelementen ausgestattet sind, in einer bevorzugten Ausführungsform umfassen die Distanzelemente ein Wärmeschild oder eine Kühlvorrichtung oder ein Wärmeschild und eine Kühlvorrichtung.

11. Apparatur zur Untersuchung von chemischen Prozessen nach einem der Ansprüche 1 bis 10, wobei die Vorrichtung (1) die Aufnahmeeinheiten Trägerelemente in der Form von Nuten, Vertiefungen oder Fächern aufweist, in denen die plattenförmigen Reaktionszelle beziehungsweise gestapelten plattenförmigen Reaktionszelle positioniert werden, vorzugsweise weisen die Trägerelemente Distanzelemente auf, die mit Mitteln für eine thermische Entkopplung ausgestattet sind.

12. Apparatur zur Untersuchung von chemischen Prozessen nach einem der Ansprüche 1 bis 11, wobei die Gruppe von plattenförmigen Reaktionszellen oder eine Gruppe von gestapelten plattenförmigen Reaktionszelle beziehungsweise eine Gruppe von Plattenreaktoren, die einen oder mehrere Plattenreaktorstapel umfassen, von einer Temperierungsvorrichtung umgeben sind, wobei es bevorzugt ist, dass die Vorrichtung eine Wärmekammer aufweist, in der mehrere Baueinheiten der Vorrichtung angeordnet sind, und die weiter bevorzugt weisen unterschiedlichen Baueinheiten jeweils separate Temperierungsvorrichtungen auf.

13. Verfahren zur Untersuchung von chemischen Prozessen in plattenförmigen Reaktionszellen mittels einer Apparatur gemäß einem der Ansprüche 1 bis 12, wobei das Verfahren die nachfolgenden Schritte umfasst:
- mehrere plattenförmige Reaktionszellen oder Stapel mit plattenförmigen Reaktionszellen werden mit der äußeren Plattenfläche auf der Oberseite einer Aufnahmeeinheit positioniert, vorzugsweise in der Weise, dass die Reaktionszellen eine waagrechte Orientierung und lineare Anordnung auf der Oberseite der Aufnahmeeinheit aufweisen und aufgrund der Schwerkraft getragen werden;
- Verpressen der plattenförmigen Reaktionszellen oder der Stapel mit plattenförmigen Reaktionszellen mittels Kolbenspanner, wobei ein oder mehrere Kolbenspanner pro plattenförmiger Reaktionszelle auf die äußere Plattenfläche der einzelnen Reaktionszellen eine Presskraft ausübt, die senkrecht zur Plattenfläche in Richtung des Anschlags wirkt und dadurch den Innenraum der einzelnen Reaktionszellen dichtend abschließt;
- Herstellung der Verbindungen der Fluidleitungen an die Versorgungsleitungen und Ableitungen, gegebenenfalls Herstellung der Verbindungen zu den elektrischen Versorgungsleitungen für die Elektroden;
- Betrieb der plattenförmigen Reaktionszellen oder der Stapel mit plattenförmigen Reaktionszellen unter den chemischen Prozessbedingungen, wobei die plattenförmigen Reaktionszellen der einzelnen Stapel seriell oder parallel verbunden sein können.

14. Verfahren zur Untersuchung von chemischen Prozessen gemäß Anspruch 13, wobei während des Betriebs der Reaktionszellen unter den chemischen Prozessbedingungen ein oder mehrere Prozessparameter pro Reaktionszelle registriert werden, wobei es bevorzugt ist, dass zumindest einer dieser Prozessparameter die Presskraft ist, mit die einzelnen Reaktionszellen zusammengedrückt werden.

15. Verfahren zur Untersuchung von chemischen Prozessen gemäß Anspruch 13 oder Anspruch 14, wobei ein Abgleich von registrierten Prozessparametern pro Reaktionszelle mit Soll-Parametern durchgeführt wird; die Soll-Parameter können durch Referenzdaten gegeben sein oder durch Prozessparametern, die bei benachbarten Reaktionszellen registriert werden;
Austausch von einzelnen plattenförmigen Reaktionszellen durch selektives Lösen von Kolbenspannern und Versorgungsleitungen, wobei es bevorzugt ist, dass der Betrieb von denjenigen plattenförmigen Reaktionszellen, die nicht getauscht werden, fortgeführt wird.

16. Verfahren zur Untersuchung von chemischen Prozessen gemäß einem der Ansprüche 12 bis 15, wobei das Verfahren in Kombination mit einer Online-Analyse der Produktfluidströme durchgeführt wird, wobei es weiter bevorzugt ist, dass das Verfahren in Kombination mit einer Inline-Analyse von Innenräumen von einer oder mehrerer Reaktionszellen im Betrieb durchgeführt wird, insbesondere bevorzugt wird das Verfahren in Kombination mit einer Online-Analyse der Produktfluidströme und einer Inline-Analyse von Innenräumen der Reaktionszellen durchgeführt.

17. Programmsteuerung zur Steuerung einer Apparatur gemäß einer der Ansprüche 1 bis 12 und zur Durchführung eines Verfahrens zur Untersuchung von chemischen Prozessen gemäß einem der Ansprüche 13 bis 16, wobei die Programmsteuerung eine Datenbank umfasst, in der die Messwerte abgespeichert werden.

## Claims

1. An apparatus for studying chemical processes in reaction cells in plate form, having:
a group of reaction cells in plate form or a group of stacks comprising reaction cells in plate form or else comprising individual reaction cells in plate form, and
a closure system that enables independent fixing of the individual reaction cells in plate form and stacked reaction cells in plate form,
wherein the closure system comprises receiving units and a multitude of piston clamp units, wherein the piston clamp units have a common drive system,
each reaction cell in plate form or each stack comprising reaction cells in plate form has two outer plate surfaces, where one outer plate surface in each case is in contact with a receiving unit and the other outer plate surface with one or more piston clamps of each piston clamp unit, wherein the piston clamp unit is designed to independently subject the reaction cells in plate form or stacked reaction cells in plate form to a compression force, where the compression force acts at right angles to the plate surface in the direction of the receiving unit,
wherein the reaction cells in plate form or stacked reaction cells in plate form each comprise a multitude of functional elements in plate form, where the functional elements in plate form are catalyst layers, gas diffusion layers, bipolar plates, proton exchange membranes, wherein each reaction cell in plate form has at least one inlet for a reactant and at least one outlet for a product, or wherein the stacked reaction cells in plate form each have at least one inlet for a reactant and at least one outlet for a product.

2. The apparatus for studying chemical processes according to claim 1, wherein the reaction cells in plate form or stacked reaction cells in plate form each comprise a multitude of functional elements in plate form, selected from the group of catalyst layers, gas diffusion layers, bipolar plates, proton exchange membranes, anion exchange membranes, separation membranes.

3. The apparatus for studying chemical processes according to claim 1 or claim 2, wherein the piston clamp units have a fluidic drive system, wherein the piston clamp units are connected by conduits to a common fluid supply conduit or to a common fluid supply tank, wherein the common fluid supply conduit or the fluid supply tank is connected to a pressure regulator valve, the pressure regulator valve preferably being an Equilibar valve, and the fluid also preferably being a pneumatic or hydraulic fluid, wherein there are switching valves in the conduits to the common fluid supply conduit or the common fluid supply tank, wherein the fluid stream through the fluid conduit can be switched on and off by means of actuation of the switching valves.

4. The apparatus for studying chemical processes according to any of claims 1 to 3, wherein the piston clamp unit of the pressing device is **characterized in that** the latter has one piston clamp per reaction cell in plate form or one piston clamp per stacked reaction cell in plate form, there is further preferably a force distributor element at the tip of each piston of the piston clamps, and each force distributor element preferably also has a ball bearing.

5. The apparatus for studying chemical processes according to any of claims 1 to 4, wherein the reaction cells in plate form have separation membranes and electrodes and are divided into half-cells, wherein the electrodes are connected to electrical supply conduits, wherein the reaction cells in plate form are configured as electrolysis cells or galvanic cells, and the reaction cells in plate form are especially preferably configured as electrolysis cells, wherein the electrodes are preferably connected to current and voltage measurement devices, and the apparatus further preferably comprises online analysis devices from the group of online voltammetry for measurement of V/A functions, impedance spectroscopy for measurement of high-frequency voltage changes.

6. The apparatus for studying chemical processes according to any of claims 1 to 5, wherein the piston or the force distributor element is equipped with a sensor that can measure a geometric change in the reaction cell during the reaction, sensors being force measurement sensors or measurement sensors selected from the group of expansion measurement strips, distance detectors such as ultrasound barriers and optical light barriers, or interference measurement analyzers.

7. The apparatus for studying chemical processes according to any of claims 1 to 6, wherein one or more of the reaction cells in plate form have one or more sensors connected to sites in the interior of the reaction cells, wherein the sensors are sensors for the performance of in situ test methods selected from the group of electrochemical dilatometry for characterization of the change in thickness of electrodes, light-microscopy or spectroscopy characterization via glass fibers relating to electrodes or membranes.

8. The apparatus for studying chemical processes according to any of claims 1 to 7, wherein the receiving units take the form of physically separate units or of a physically connected unit; if the receiving units take the form of physically separate units, each receiving unit has a dedicated holding frame connected to one piston clamp unit; if the receiving units take the form of a physically connected unit, the receiving elements have a common holding frame, wherein the piston clamp units are preferably arranged in a common element, wherein the common holding frame connects the receiving units and the common element.

9. The apparatus for studying chemical processes according to any of claims 1 to 8, wherein the apparatus is **characterized in that** the reaction cells in plate form have an inner plate area in the range from 1.5 x 1.5 cm² to 30 x 30 cm², the inner plate area is preferably 2.0 x 2.0 cm² to 25 x 25 cm², and the inner plate area is further preferably 3.0 x 3.0 cm² to 15 x 15 cm².

10. The apparatus for studying chemical processes according to any of claims 1 to 9, wherein the pistons of the piston clamps are equipped with spacer elements, and in a preferred embodiment the spacer elements comprise a heat shield or a cooling device or a heat shield and a cooling device.

11. The apparatus for studying chemical processes according to any of claims 1 to 10, wherein the apparatus (1) has the receiving units carrier elements in the form of grooves, depressions or compartments in which the reaction cells in plate form or stacked reaction cells in plate form are positioned, the carrier elements preferably having spacer elements equipped with means of thermal decoupling.

12. The apparatus for studying chemical processes according to any of claims 1 to 11, wherein the group of reaction cells in plate form or a group of stacked reaction cells in plate form or a group of plate reactors comprising one or more plate reactor stacks is surrounded by a temperature control device, wherein the device preferably has a heat chamber in which two or more components of the device are disposed, and the different components further preferably each have separate temperature control devices.

13. A method of studying chemical processes in reaction cells in plate form by means of an apparatus according to any of claims 1 to 12, wherein the method comprises the following steps:
- a plurality of reaction cells in plate form or stacks comprising reaction cells in plate form are positioned with the outer plate surface on the top side of a receiving unit, preferably in such a way that the reaction cells have a horizontal orientation and linear arrangement on the top side of the receiving unit and are supported owing to gravity;
- compressing the reaction cells in plate form or the stack comprising reaction cells in plate form by means of piston clamps, where one or more piston clamps per reaction cell in plate form exert a compression force on the outer plate surface of the individual reaction cells that acts at right angles to the plate surface in the direction of the stop and hence closes off the interior of the individual reaction cells in a sealing manner;
- establishing the connections of the fluid conduits to the supply conduits and outlets, optionally establishing the connections to the electrical supply conduits for the electrodes;
- operating the reaction cells in plate form or the stack comprising reaction cells in plate form under the chemical process conditions, where the reaction cells in plate form in the individual stacks may be connected in series or in parallel.

14. The method of studying chemical processes according to claim 13, wherein, during the operation of the reaction cells under the chemical process conditions, one or more process parameters per reaction cell are registered, and at least one of these process parameters is preferably the compression force with which individual reaction cells are pressed together.

15. The method of studying chemical processes according to claim 13 or claim 14, wherein a comparison of registered process parameters per reaction cell with target parameters is conducted; the target parameters may be given by reference data or by process parameters that are registered in adjacent reaction cells;
exchange of individual reaction cells in plate form by selective release of piston clamps and supply conduits, preferably with continuation of operation of those reaction cells in plate form that are not exchanged.

16. The method of studying chemical processes according to any of claims 12 to 15, wherein the method is conducted in combination with an online analysis of the product fluid streams, the method being further preferably conducted in combination with an inline analysis of interiors of one or more reaction cells in operation, and the method being especially preferably conducted in combination with an online analysis of the product fluid streams and an inline analysis of interiors of the reaction cells.

17. A program controller for control of an apparatus according to any of claims 1 to 12 and for performance of a method of studying chemical processes according to any of claims 13 to 16, wherein the program controller comprises a database in which the measurements are stored.

## Revendications

1. Appareil pour l'étude de processus chimiques dans des cellules de réaction en forme de plaque, comprenant :
un groupe de cellules de réaction en forme de plaque ou un groupe d'empilements de cellules de réaction en forme de plaque ou, selon le cas, qui comprennent également des cellules de réaction en forme de plaque individuelles, ainsi qu'un système de fermeture qui permet une fixation indépendante des cellules de réaction en forme de plaque individuelles et des cellules de réaction en forme de plaque empilées ;
dans lequel le système de fermeture comprend des unités de réception et une multitude d'unités de serrage à piston, les unités de serrage à piston présentant un système d'entraînement commun,
chaque cellule de réaction en forme de plaque ou chaque empilement de cellule de réaction en forme de plaque présente deux surfaces de plaque externes, à chaque fois l'une surface de plaque externe étant en contact avec une unité de réception et l'autre surface de plaque externe étant en contact à chaque fois avec un ou plusieurs dispositifs de serrage à piston de l'unité de serrage à piston, l'unité de serrage à piston étant conçue pour appliquer une force de pression aux cellules de réaction en forme de plaque ou aux cellules de réaction en forme de plaque empilées indépendamment les unes des autres, la force de pression agissant perpendiculairement à la surface de la plaque en direction de l'unité de réception,
dans lequel les cellules de réaction en forme de plaque ou les cellules de réaction en forme de plaque empilées comprennent à chaque fois une multitude d'éléments fonctionnels en forme de plaque, les éléments fonctionnels en forme de plaque étant des couches de catalyseur, des couches de diffusion gazeuse, des plaques bipolaires, des membranes échangeuses de protons, chaque cellule de réaction en forme de plaque présentant à chaque fois au moins une conduite d'alimentation pour une substance de départ et à chaque fois au moins une conduite d'évacuation pour un produit ou la cellule de réaction en forme de plaque empilée présentant à chaque fois au moins une conduite d'alimentation pour une substance de départ et à chaque fois au moins une conduite d'évacuation pour un produit.

2. Appareil pour l'étude de processus chimiques selon la revendication 1, dans lequel les cellules de réaction en forme de plaque ou les cellules de réaction en forme de plaque empilées comprennent à chaque fois une multitude d'éléments fonctionnels en forme de plaque, qui sont choisis dans le groupe des couches catalytiques, des couches de diffusion gazeuse, des plaques bipolaires, des membranes échangeuses de protons, des membranes échangeuses d'anions, des membranes de séparation.

3. Appareil pour l'étude de processus chimiques selon la revendication 1 ou la revendication 2, dans lequel les unités de serrage à piston présentent un système d'entraînement fluidique, les unités de serrage à piston étant reliées par des conduites à une conduite commune d'alimentation en fluide ou à un réservoir commun d'alimentation en fluide, la conduite commune d'alimentation en fluide ou le réservoir d'alimentation en fluide étant relié(e) à une vanne de régulation de pression, de préférence, la vanne de régulation de pression étant une vanne Equilibar, le fluide étant en outre de préférence un fluide pneumatique ou hydraulique, des vannes de commutation étant agencées dans les conduites vers la conduite commune d'alimentation en fluide ou le réservoir commun d'alimentation en fluide, l'actionnement les vannes de commutation permettant de mettre en marche ou d'arrêter le flux fluidique à travers la conduite fluidique.

4. Appareil pour l'étude de processus chimiques selon l'une des revendications 1 à 3, dans lequel l'unité de serrage à piston du dispositif de compression est **caractérisée en ce qu'**elle présente un dispositif de serrage à piston par cellule de réaction en forme de plaque ou, selon le cas, un dispositif de serrage à piston par cellule de réaction en forme de plaque empilée, plus préférablement, un élément de distribution de force est disposé au niveau de la pointe de chaque piston du dispositif de serrage à piston, chaque élément de distribution de force présente en outre de préférence un roulement à billes.

5. Appareil pour l'étude de processus chimiques selon l'une des revendications 1 à 4, dans lequel les cellules de réaction en forme de plaque présentent des membranes de séparation et des électrodes et sont réparties en demi-cellules, les électrodes étant reliées à des lignes d'alimentation électrique, les cellules de réaction en forme de plaque étant conçues sous forme de cellules d'électrolyse ou de cellules galvaniques, en particulier de préférence, les cellules de réaction en forme de plaque étant conçues sous forme de cellules d'électrolyse, les électrodes étant de préférence connectées à des dispositifs de mesure de courant et de tension, plus préférablement, l'appareil comprend des analyseurs en ligne du groupe voltammétrie en ligne pour la mesure de fonctions V/A, la spectroscopie d'impédance pour la mesure des variations de tension à haute fréquence.

6. Appareil pour l'étude de processus chimiques selon l'une des revendications 1 à 5, dans lequel le piston ou l'élément de distribution de force est équipé d'un capteur, qui peut mesurer une variation géométrique de la cellule de réaction pendant la réaction, les capteurs sont des capteurs de mesure de force ou des capteurs de mesure, qui sont choisis dans le groupe jauges de contrainte, détecteurs de distance tels que les détecteurs d'ultrasons, capteurs photoélectriques ou analyseur de mesure d'interférences.

7. Appareil pour l'étude de processus chimiques selon l'une des revendications 1 à 6, dans lequel une ou plusieurs des cellules de réaction en forme de plaque présentent un ou plusieurs capteurs, qui sont reliés à des endroits à l'intérieur des cellules de réaction, les capteurs étant des capteurs pour la mise en œuvre de méthodes de mesure in situ, qui sont choisies dans le groupe dilatométrie électrochimique pour caractériser le changement d'épaisseur des électrodes, caractérisation par microscopie optique ou par spectroscopie par l'intermédiaire de fibres de verre comme électrodes ou membranes.

8. Appareil pour l'étude de processus chimiques selon l'une des revendications 1 à 7, dans lequel unités de réception sont présentes sous forme d'unités physiquement séparées ou sous forme d'une unité physiquement reliée ; dans le cas où les unités de réception sont présentes sous forme d'unités physiquement séparées, chaque unité de réception présente son propre cadre de retenue relié à chaque fois à unité de serrage à piston ; dans le cas où les unités de réception sont présentes sous forme d'une unité physiquement reliée, les éléments de réception présentent un cadre de retenue commun, les unités de serrage à piston étant de préférence agencées dans un élément commun, le cadre de retenue commun reliant les unités de réception et l'élément commun.

9. Appareil pour l'étude de processus chimiques selon l'une des revendications 1 à 8, dans lequel le dispositif est **caractérisé en ce que** les cellules de réaction en forme de plaque présentent une surface de plaque interne qui se situe dans une plage de 1,5 x 1,5 cm² à 30 x 30 cm², de préférence, la surface de plaque interne se situe dans la plage de 2,0 x 2,0 cm² à 25 x 25 cm², la surface de plaque interne se situe en outre de préférence dans la plage de 3,0 x 3,0 cm² à 15 x 15 cm².

10. Appareil pour l'étude de processus chimiques selon l'une des revendications 1 à 9, dans lequel les pistons des dispositifs de serrage à piston sont équipés d'éléments d'écartement, dans un mode de réalisation préféré, les éléments d'écartement comprennent un bouclier thermique ou un dispositif de refroidissement ou un bouclier thermique et un dispositif de refroidissement.

11. Appareil pour l'étude de processus chimiques selon l'une des revendications 1 à 10, dans lequel le dispositif (1) les éléments support présente des unités de réception sous forme de rainures, d'évidements ou de compartiments, dans lesquel(le)s sont positionnées les cellules de réaction en forme de plaque ou, selon le cas, les cellules de réaction en forme de plaque empilées, de préférence les éléments support présentent des éléments d'écartement qui sont équipés de moyens de découplage thermique.

12. Appareil pour l'étude de processus chimiques selon l'une des revendications 1 à 11, dans lequel le groupe de cellules de réaction en forme de plaque ou un groupe de cellules de réaction en forme de plaque empilées ou, selon le cas, un groupe de réacteurs en forme de plaque, comprenant un ou plusieurs empilements de réacteurs en forme de plaque, sont entourés par un dispositif de régulation de température, dans lequel le dispositif comprend de préférence une chambre de chauffage dans laquelle sont agencés plusieurs modules du dispositif et plus préférablement, les différents modules présentent à chaque fois des dispositifs de régulation de température séparés.

13. Procédé pour l'étude de processus chimiques dans des cellules de réaction en forme de plaque, au moyen d'un appareil selon l'une des revendications 1 à 12, dans lequel le procédé comprend les étapes suivantes :
- plusieurs cellules de réaction en forme de plaque ou empilements de cellules de réaction en forme de plaque sont positionné(e)s avec la surface de plaque externe sur la face supérieure d'une unité de réception, de préférence de telle manière que les cellules de réaction présentent une orientation horizontale et un agencement linéaire sur la face supérieure de l'unité de réception et sont supportées par gravité ;
- compression des cellules de réaction en forme de plaque ou des empilements de cellules de réaction en forme de plaque au moyen de dispositifs de serrage à piston, un ou plusieurs dispositifs de serrage à piston par cellule de réaction en forme de plaque exerçant une force de pression sur la surface de plaque externe des cellules de réaction individuelles, qui agit perpendiculairement à la surface de plaque en direction de la butée et qui ferme ainsi de manière étanche l'intérieur des cellules de réaction individuelles ;
- réalisation des raccordements des conduites fluidiques aux conduites d'alimentation et d'évacuation, le cas réalisation des connexions aux lignes d'alimentation électrique pour les électrodes,
- fonctionnement des cellules de réaction en forme de plaque ou des empilements de cellules de réaction en forme de plaque dans les conditions de processus chimique, les cellules de réaction en forme de plaque des empilements individuels pouvant être reliées en série ou en parallèle.

14. Procédé pour l'étude de processus chimiques selon la revendication 13, dans lequel, pendant le fonctionnement des cellules de réaction dans les conditions de processus chimique, un ou plusieurs paramètres de processus par cellule de réaction sont enregistrés, au moins l'un de ces paramètres de processus étant de préférence la force de compression à laquelle les cellules de réaction individuelles sont comprimées.

15. Procédé pour l'étude de processus chimiques selon la revendication 13 ou 14, dans lequel on effectue une comparaison de paramètres de processus enregistrés par cellule de réaction à des paramètres consigne ; les paramètres de consigne pouvant être donnés par des données de référence ou par des paramètres de processus, qui sont enregistrés dans des cellules de réaction adjacentes ;
remplacement de cellules de réaction en forme de plaque individuelles par relâchement sélectif de dispositifs de serrage à piston et détachement de conduites d'alimentation, le fonctionnement des cellules de réaction en forme de plaque, qui ne sont pas échangées, étant de préférence poursuivi.

16. Procédé pour l'étude de processus chimiques selon l'une des revendications 12 à 15, dans lequel le procédé est mis en œuvre en combinaison avec une analyse en ligne des flux fluidiques de produit, le procédé étant plus préférablement mis en œuvre en combinaison avec une analyse intégrée de l'intérieur d'une ou plusieurs cellules de réaction en fonctionnement, le procédé étant en particulier de préférence mis en œuvre en combinaison avec une analyse en ligne des flux fluidiques de produit et une analyse intégrée de l'intérieur des cellules de réaction.

17. Commande de programme pour la commande d'un appareil selon l'une des revendications 1 à 12 et pour la mise en œuvre d'un procédé pour l'étude de processus chimiques selon l'une des revendications 13 à 16, dans laquelle la commande de programme comprend une base de données dans laquelle les valeurs mesurées sont mémorisées.
